# EUROPÄISCHE PATENTSCHRIFT

(11) **EP 4 384 018 B1**
(45) Veröffentlichungstag und Bekanntmachung des Hinweises auf die Patenterteilung: **05.08.2026**
(21) Anmeldenummer: 22701991.6
(22) Anmeldetag: 27.01.2022
(51) Int. Cl.: A22C 21/00

(54) **VORRICHTUNG UND VERFAHREN ZUM ABLÖSEN VON SICH AN EINEM BRUSTBEINKAMM EINER GEFLÜGELKARKASSE BEFINDLICHEN FLEISCHSTREIFEN**
APPARATUS AND METHOD FOR DETACHING MEAT STRIPS, WHICH ARE LOCATED ON A BREASTBONE CREST OF A POULTRY CARCASS
DISPOSITIF ET PROCÉDÉ DE DÉTACHEMENT DE BANDES DE VIANDE SE TROUVANT SUR UNE CRÊTE STERNALE D'UNE CARCASSE DE VOLAILLE

(30) Priorität: 11.08.2021 WO PCT/EP2021/072400
(43) Veröffentlichungstag der Anmeldung: 19.06.2024
(73) Patentinhaber: Nordischer Maschinenbau Rud. Baader GmbH + Co. KG, 23560 Lübeck (DE)
(72) Erfinder: SCHULZE, Adrian, 23560 Lübeck (DE); LANDT, Andreas, 23560 Lübeck (DE)
(74) Vertreter: Stork Bamberger Patentanwälte PartmbB
(86) Internationale Anmeldenummer: PCT/EP2022/051900
(87) Internationale Veröffentlichungsnummer: WO 2023/016671

(56) Entgegenhaltungen:
- WO-A1-2008/118008
- US-A- 4 682 386
- US-B2- 8 845 401

## Beschreibung

Die Erfindung betrifft eine Vorrichtung, ausgebildet und eingerichtet zum Ablösen von sich an einem Brustbeinkamm einer Geflügelkarkasse befindlichen Fleischstreifen von bereits von Brustfilets befreiten Geflügelkarkassen geschlachteter Geflügelkörper oder Teilen davon, umfassend einen umlaufenden Förderer mit mindestens einer Haltevorrichtung mit einem Stützkörper zum Aufnehmen und Halten der Geflügelkörper bzw. der Teile davon während des Transports in Transportrichtung T durch die Vorrichtung, sowie mindestens eine Bearbeitungsstation entlang einer Förderstrecke des Förderers, wobei eine der Bearbeitungsstationen als Löseeinheit zum Ablösen des Fleischstreifens vom Brustbeinkamm ausgebildet ist.

Des Weiteren betrifft die Erfindung ein Verfahren zum Ablösen von sich an einem Brustbeinkamm einer Geflügelkarkasse befindlichen Fleischstreifen von bereits von Brustfilets befreiten Geflügelkarkassen geschlachteter Geflügelkörper oder Teilen davon, umfassend die Schritte: Zuführen der Geflügelkarkasse entlang einer Förderstrecke in Transportrichtung T in den Bereich einer Löseeinheit zum Ablösen des Fleischstreifens, wobei die Geflügelkarkasse beim Transport in Transportrichtung T auf einem Stützkörper einer Haltevorrichtung zum Halten der Geflügelkarkassen beim Transport und während der Bearbeitung gehalten wird, wobei die Längsachse L_{SK} des Stützkörpers parallel zur Transportrichtung T ausgerichtet ist, und Ablösen des Fleischstreifens beim Transport entlang der bzw. durch die Löseeinheit.

Solche Vorrichtungen und Verfahren kommen in der geflügelverarbeitenden Industrie zum Einsatz, um beim Filetierprozess einerseits eine hohe Ausbeute bei der Fleischgewinnung zu erzielen und andererseits ein möglichst sauberes Brustbein oder Teile davon, nämlich insbesondere den Knorpel, gewinnen zu können. Nach dem Lösen und Entfernen der Brustfilets, also insbesondere der äußeren und der inneren Brustfilets, von der Karkasse verbleibt grundsätzlich noch Restfleisch an der Karkasse, das sich zum einen seitlich am Brustbein befindet und z.B. mittels Schabewerkzeugen von der Karkasse gelöst wird. Zum anderen verbleibt bei der Einzelfiletgewinnung mittig auf dem Brustbein, nämlich auf dem Brustbeinkamm, ein Fleischstreifen, der insbesondere dann entsteht, wenn die Brustfilets separat voneinander von der Karkasse getrennt werden. Durch die separaten Trennschnitte zur Gewinnung der beiden Brustfilets bleibt der mittig platzierte Fleischstreifen zunächst an der Karkasse, weshalb man auch vom Mittelstreifen spricht. Das Restfleisch mit der Membran, die zwischen dem Fleisch und dem Knochen/Knorpel des Brustbeins liegt, bildet den Mittelstreifen, der sich entlang des Brustbeinkamms bis in den Bereich des Brustbeinhorns erstreckt.

Dieser Mittelstreifen entsteht wie erwähnt bei der Verarbeitung von Geflügelkörpern oder Teilen davon, wobei mit den Teilen insbesondere Vorderhälften (so genannte "fronthalfs") und Brustkappen der Geflügelkörper beschrieben sind. Das Ablösen der Fleischstreifen/Mittelstreifen beschreibt das Anlösen und mindestens teilweise Ablösen ebenso wie das vollständige Ablösen, also auch und insbesondere das vollständige Trennen des Fleischstreifens von dem Brustbeinkamm.

Eine Vorrichtung mit den Merkmalen des Oberbegriffes des Anspruches 1 ist aus der WO 2008/118008 A1 bekannt.

Bei den bisher bekannten Verfahren und Vorrichtungen zum Entfernen des den Mittelstreifen bildenden Restfleisches, das sich nach dem Lösen und Trennen der Brustfilets noch an der Karkasse im Bereich des Brustbeinkamms befindet, erfolgt wahlweise eine manuelle Entfernung oder eine automatisierte Entfernung mittels mechanischer Werkzeuge. Zum Entfernen des Mittelstreifens sind bei den bekannten Lösungen Walzen vorgesehen. Zwei gegeneinander laufende Walzen sind mittels Antriebsmitteln ineinander verzahnt umlaufend angetrieben. Die beiden Walzen greifen den Mittelstreifen und ziehen diesen vom Brustbeinkamm ab. Diese Lösung weist jedoch eine Reihe von Nachteilen auf. Zum einen ist die Herstellung verzahnter Walzen aufwendig und teuer. Zum anderen sind Antriebsmittel notwendig, die ebenfalls zur Verteuerung der Vorrichtung führen. Ein ganz entscheidender Nachteil besteht jedoch darin, dass die Qualität und/oder die Ausbeute des gewonnenen Restfleisches unzureichend ist/sind, da die Walzen aufgrund unterschiedlicher Größen der zu verarbeitenden Geflügelkörper oder Teilen davon bei größeren Geflügelkörpern oder Teilen davon teilweise Bestandteile vom Knochen/Knorpel des Brustbeins mit ablösen und somit das Restfleisch verunreinigen und ggf. unbrauchbar machen bzw. bei kleineren Geflügelkörpern oder Teilen davon teilweise das Restfleisch nicht oder nicht vollständig ablösen, da die Walzen nur teilweise oder gar nicht in Eingriff mit dem Restfleisch gelangen. Eine Anpassung an unterschiedliche Größen der Geflügelkörper ist nur sehr aufwendig zu realisieren.

Der Erfindung liegt somit die Aufgabe zugrunde, eine einfache Vorrichtung zu schaffen, die ein produktschonendes und zuverlässiges Entfernen der Fleischstreifen/Mittelstreifen vom Brustkamm für Geflügelkörper unterschiedlicher Größe gewährleistet. Die weitere Aufgabe besteht darin, ein entsprechendes Verfahren vorzuschlagen.

Diese Aufgabe wird durch die Vorrichtung mit den eingangs genannten Merkmalen dadurch gelöst, dass die Löseeinheit ein Anlöseelement und ein Ablöseelement umfasst, wobei das Anlöseelement zum Einschneiden des Fleischstreifens im Bereich eines in Transportrichtung T vorauslaufenden Brustbeinhorns des Brustbeinkamms und das Ablöseelement zum Greifen und Abziehen des Fleischstreifens vom Brustbeinkamm ausgebildet und eingerichtet ist. Durch die erfindungsgemäße Lösung ist das produktschonende und zuverlässige Entfernen der Fleischstreifen/Mittelstreifen vom Brustkamm für Geflügelkörper unterschiedlicher Größe gewährleistet, indem getrennte Arbeitsschritte zum Anlösen einerseits und zum Ablösen andererseits realisierbar sind, ohne dass das Anlöseelement unmittelbar in Eingriff mit dem Ablöseelement steht.

Das Anlöseelement und das Ablöseelement können in einem gemeinsamen Kombinationswerkzeug vereint sein, wobei die Funktionalitäten (zum Anlösen und zum Ablösen) des Kombinationswerkzeugs räumlich nacheinander zum Ausführen eines Anlöseschrittes und eines nachfolgenden Ablöseschrittes ausgebildet sind. Eine bevorzugte Ausführungsform ist dadurch gekennzeichnet, dass das Anlöseelement und das Ablöseelement separate Werkzeuge sind, die zur Ausführung separater und nacheinander ausführbarer Arbeitsschritte ausgebildet und eingerichtet und in Transportrichtung T hintereinander angeordnet sind. Diese erfindungsgemäße Ausbildung der Vorrichtung gewährleistet auf besonders zuverlässige und einfache Weise das produktschonende Ablösen des Restfleisches vom Brustbeinkamm von Geflügelkörpern, indem mit einem ersten einfachen und damit günstigen Werkzeug das Restfleisch angelöst und mit einem zweiten einfachen und damit günstigen Werkzeug das angelöste Restfleisch abgelöst wird. Mit dem Ablösen ist das überwiegende oder vollständige Abziehen des Fleischstreifens beschrieben. Durch die Aufteilung der einzelnen Arbeitsschritte auf unterschiedliche Werkzeuge können diese einfach und kostengünstig hergestellt werden. Im Weiteren wird durch die Aufteilung der Arbeitsschritte auf zwei Werkzeuge und die Wirkungsweise der Werkzeuge frei von einer Verzahnung ineinander eine produktschonende Ernte des Restfleisches vom Brustbeinkamm gewährleistet. Die erfindungsgemäße Ausbildung mit zwei Werkzeugen zum Anlösen und Ablösen des Restfleisches vereinfacht des Weiteren auch die Anpassung der Werkzeuge an unterschiedliche Größen der zu verarbeitenden Geflügelkörper. Dadurch werden die zuvor beschriebenen Vorteile weiter unterstützt. Durch die räumliche Trennung der zwei Werkzeuge, die steuerungstechnisch aufeinander abgestimmt sind, jedoch ohne eine direkte Wirkverbindung miteinander, ist das saubere und produktschonende Ablösen des Fleischstreifens sichergestellt.

Vorteilhafterweise sind das Anlöseelement und das Ablöseelement an einem - vorzugsweise gemeinsamen - Grundkörper angeordnet, wobei das Ablöseelement in Transportrichtung T hinter dem Anlöseelement angeordnet ist. Damit ist ein einfacher und kostengünstiger Aufbau gewährleistet. Optional können die Werkzeuge auch direkt an einem Gehäuse, einem Rahmen oder dergleichen der Vorrichtung angeordnet sein. Bevorzugt ist jedoch eine Anordnung der Werkzeuge an einem Grundkörper, so dass die Werkzeuge bzw. die Löseeinheit auch modular nachrüstbar sind. Dabei kann jedes Werkzeug einem eigenen Grundkörper zugeordnet sein. Besonders bevorzugt ist aber die Anordnung der Werkzeuge an einem gemeinsamen Grundkörper.

Eine vorteilhafte Ausführungsform zeichnet sich dadurch aus, dass der Stützkörper vorzugsweise um eine Drehachse D_{SK}, die im Wesentlichen quer zur Transportrichtung T ausgerichtet ist, drehbar ausgebildet ist und im Bereich der Löseeinheit eine Position aufweist, in der die Längsachse L_{SK} des Stützkörpers parallel zur Transportrichtung T ausgerichtet ist. Mit anderen Worten läuft der Stützkörper mit der darauf angeordneten Geflügelkarkasse in Längsrichtung in den Bereich der Werkzeuge ein, so dass auch das Brustbein mit dem Brustbeinkamm in seiner Längsrichtung in Transportrichtung weist. Durch die Möglichkeit der Drehung des Stützkörpers besteht die einfache und zuverlässige Möglichkeit, den noch vom Ablöseelement gegriffenen Fleischstreifen endgültig und vollständig vom Brustbein zu abzulösen, nämlich insbesondere abzureißen. Durch die Drehung des Stützkörpers kann der Ablöseprozess des Fleischstreifens ggf. verkürzt und vor allem vollendet werden, insbesondere für den Fall, dass das Ablöseelement aufgrund enger Abstände der Haltevorrichtungen zum Bearbeiten des nächsten Geflügelkörpers in seine Ausgangsposition gebracht werden muss. Besonders bevorzugt ist die Haltevorrichtung drehbar ausgebildet, durch deren Drehung auch der Stützkörper mitgedreht wird.

In einer besonders bevorzugten Ausführungsform ist die Vorrichtung dadurch gekennzeichnet, dass das Anlöseelement einen Schwenkhebel umfasst, an dessen freiem Ende eine Klinge angeordnet ist, wobei der Schwenkhebel schwenkbar um eine Schwenkachse S_{AE} am Grundkörper gelagert ist. Der Schwenkhebel kann gerade ausgebildet sein. Vorzugsweise ist der Schwenkhebel jedoch gekrümmt ausgebildet. Durch diese Hakenform des Schwenkhebels ist ein gezieltes und präzises Auftreffen der am freien Ende angeordneten Klinge auf das Brustbeinhorn gewährleistet. Mit anderen Worten ist der Schwenkhebel mit der Klinge derart ausgebildet und angeordnet, dass die Schneidkante der Klinge beim Vorbeitransportieren der Geflügelkarkassen direkt auf den Ansatz des Fleischstreifens im Bereich des Brustbeinhorns trifft und den Fleischstreifen einschneidet und hochhebelt bzw. anhebt, um das freie und abgelöste Ende des Fleischstreifens für das nachfolgende Ablöseelement zu positionieren. Die Klinge selbst ist vorzugsweise linear ausgebildet und weist auf der dem zu bearbeitenden/einzuschneidenden Fleischstreifen zugewandten Seite eine geschärfte Schneidkante auf.

Vorteilhafterweise ist die Klinge lösbar am Schwenkhebel befestigt. Dadurch ist eine einfache Austauschbarkeit z.B. bei Verschleiß der Klinge gewährleistet. Die Klinge kann z.B. mittels Schraubverbindung, Klemm- oder andere Schnellverschlusssysteme am Schwenkhebel befestigt sein.

Eine besonders vorteilhafte Weiterbildung ist dadurch gekennzeichnet, dass der Schwenkhebel federgespannt gegen einen einstellbaren Anschlag in einer Ausgangsposition steht, derart, dass die mittels des Förderers entlang der Förderstrecke in Transportrichtung T transportierten Geflügelkarkassen mit dem Brustbein zwangsläufig in Eingriff mit dem in der Ausgangsposition stehenden Schwenkhebel und dessen daran angeordneter Klinge gelangen. Dadurch ist ein sicheres Anlösen des Fleischstreifens sichergestellt. Nachdem die Geflügelkarkasse außer Eingriff mit dem Anlöseelement transportiert ist, stellt die Federspannung sicher, dass sich der Schwenkhebel schnell und selbsttätig in seine Ausgangsposition zurückbewegt. Mit dem einstellbaren Anschlag kann die Ausgangsposition für unterschiedliche Größenbereiche variiert werden, um stets den optimalen Treffpunkt der Klinge auf das Brustbeinhorn bereitzustellen. Die Federspannung und damit die Federkraft ist optional auch einstellbar oder durch Tausch des Federelementes variierbar. Die Größe der Federkraft ist ein wichtiger Parameter für das zuverlässige Einschneiden des Fleischstreifens. Anstelle eines Federelementes sind auch aktiv ansteuerbare Elemente, beispielsweise pneumatische Antriebe einsetzbar, um den Schwenkhebel oder auch separate Klingen zum Einschneiden des Fleischstreifens in Eingriff mit dem Brustbeinhorn und außer Eingriff mit diesem zu bewegen.

Besonders bevorzugt ist die Klinge am freien Ende des Schwenkhebels in dessen Ausgangsposition in einem Winkel β zur zu verarbeitenden Geflügelkarkasse ausgerichtet, derart, dass die Spitze der Klinge auf das Brustbeinhorn gerichtet ist. Der richtige Winkel β ist neben der Federkraft ein wichtiger Parameter zum präzisen Einschneiden des Fleischstreifens am Brustbeinhorn.

Zweckmäßigerweise ist der zwischen der Längsachse L_{SK} des Stützkörpers und der Längsachse L_{K} der Klinge eingeschlossene Winkel β größer 0° und kleiner 90° und beträgt bevorzugt zwischen 20° und 60° und besonders bevorzugt etwa 45°. Durch diese Winkelstellung der Klinge zum Brustbeinhorn ist zum einen der ideale Treffpunkt der Klinge bzw. deren Schneidkante mit dem Brustbeinhorn gewährleistet. Zum anderen stellt die Winkelstellung sicher, dass das eingeschnittene freie Ende des Fleischstreifens derart hochgehebelt bzw. angehoben wird, dass das nachfolgende Ablöseelement dieses freie Ende zuverlässig greifen kann.

Eine besonders bevorzugte Ausführungsform ist dadurch gekennzeichnet, dass der schwenkbar gelagerte und federgespannte Schwenkhebel produktgesteuert gegen die Federkraft auslenkbar ausgebildet ist. Durch diese einfache Ausführungsform funktioniert das Ablösen der Fleischstreifen für Geflügelkörper unterschiedlicher Größe zuverlässig und präzise, so dass die abgelösten Fleischstreifen bei größeren Geflügelkörpern oder Teilen davon frei von Knochen- und/oder Knorpelbestandteilen des Brustbeins sind und bei kleineren Geflügelkörpern oder Teilen davon die Fleischstreifen zuverlässig und vollständig geerntet werden. Durch die Produktsteuerung "findet" das Produkt (nämlich die Geflügelkarkasse) größenunabhängig das Werkzeug zum Anlösen des Fleischstreifens und steuert dieses selbst.

Eine bevorzugte Ausführungsform ist dadurch gekennzeichnet, dass das Ablöseelement eine Greifzange mit einem Paar Zangenbacken sowie ein Abweiserelement umfasst, wobei die Greifzange in Transportrichtung T vor dem Abweiserelement positioniert ist. Die Greifzange ist zum Greifen und Halten des vom Anlöseelement eingeschnittenen freien Endes des Fleischstreifens ausgebildet und eingerichtet. Das Abweiserelement ist zum Auslenken der Greifzange ausgebildet und eingerichtet. Durch die beanspruchte Anordnung von Greifzange und Abweiserelement hintereinander ist sichergestellt, dass zuerst das freie Ende des Fleischstreifens greif- und klemmbar ist, bevor die Geflügelkarkasse mit dem Abweiserelement in Kontakt kommt, um den geklemmten Fleischstreifen in Längsrichtung des Brustbeins ziehend von diesem abzulösen. Die erfindungsgemäße Ausbildung stellt auf einfache und zuverlässige Weise das Ablösen der Fleischstreifen unabhängig von der Größe des zu bearbeitenden Geflügelkörpers oder Teilen davon sicher. Das Ablöseelement kann auch auf andere Art ausgebildet sein, solange es zum Festhalten des freien Endes des Fleischstreifens und Abziehen desselben vom Brustbeinkamm ausgebildet und eingerichtet ist.

Vorteilhafterweise ist das Ablöseelement schwenkbar um eine Schwenkachse S_{GA} am Grundkörper gelagert. Durch die schwenkbare Lagerung des Ablöseelementes ist auf einfache Weise eine Relativbewegung des Ablöseelementes zur zu bearbeitenden Geflügelkarkasse gewährleistet, durch die das Ablösen des gegriffenen bzw. geklemmten Fleischstreifens einfach und zuverlässig sichergestellt ist. Anstelle der schwenkbaren Lagerung sind auch andere Relativbewegungen zwischen Ablöseelement und Geflügelkarkasse realisierbar, und zwar produktgesteuert und/oder aktiv z.B. durch pneumatische Antriebe.

Besonders bevorzugt steht das Ablöseelement federgespannt gegen einen einstellbaren Anschlag in einer Ausgangsposition, derart, dass die mittels des Förderers entlang der Förderstrecke in Transportrichtung T transportierten Geflügelkarkassen mit ihrem Brustbein zwangsläufig in Eingriff mit dem in der Ausgangsposition stehenden Ablöseelement gelangen. Dadurch wird die Relativbewegung zwischen Ablöseelement und Geflügelkarkasse produktgesteuert ausgelöst und ausgeführt. Wenn die Geflügelkarkasse mit ihrem Brustbein gegen das Ablöseelement läuft, wird das Ablöseelement gegen die Federkraft aus der Transportbahn des Brustbeins ausgelenkt, was dazu führt, dass eine Ablösekraft, vorzugsweise eine Zugkraft, auf das Restfleisch wirkt. Nachdem die Geflügelkarkasse außer Eingriff mit dem Ablöseelement transportiert ist, stellt die Federspannung sicher, dass sich das Ablöseelement schnell und selbsttätig in seine Ausgangsposition zurückbewegt. Mit dem einstellbaren Anschlag kann die Ausgangsposition für unterschiedliche Größenbereiche variiert werden, um stets den optimalen Kontaktpunkt des Ablöseelementes mit der Geflügelkarkasse bereitzustellen. Die Federspannung und damit die Federkraft ist optional auch einstellbar oder durch Tausch des Federelementes variierbar. Anstelle eines Federelementes sind auch aktiv ansteuerbare Elemente, beispielsweise pneumatische Antriebe einsetzbar, um die Relativbewegung ausführen zu können.

Vorteilhafterweise ist das schwenkbar gelagerte und federgespannte Ablöseelement produktgesteuert gegen die Federkraft auslenkbar ausgebildet. Damit ist größenunabhängig ein zuverlässiges Ablösen bzw. Abziehen des Fleischstreifens gewährleistet.

Eine besonders bevorzugte Ausführungsform ist dadurch gekennzeichnet, dass das Abweiserelement um die Schwenkachse S_{GA} schwenkbar am Grundkörper gelagert ist, und das Paar Zangenbacken relativ zum Abweiserelement schwenkbar um Schwenkachsen S_{ZB} am Abweiserelement gelagert ist, wobei die Schwenkachsen S_{ZB} der Zangenbacken im Wesentlichen quer zur Schwenkachse S_{GA} des Abweiserelementes ausgerichtet sind. Die Greifzange ist am Abweiserelement angeordnet. Dazu weist das Abweiserelement einen Abweiserarm und einen Abweiserkopf auf. Die Zangenbacken sind schwenkbar am Abweiserarm gelagert, der selbst schwenkbar am Grundkörper gelagert ist. Der Abweiserkopf erstreckt sich am freien Ende des Abweiserarmes schräg in Richtung des zu verarbeitenden Brustbeins, um ein Auflaufen des Brustbeins sicherzustellen. Die beiden Zangenbacken sind in Transportrichtung T vor dem Abweiserelement bzw. genauer dem Abweiserkopf angeordnet, um das freie Ende des angelösten Fleischstreifens greifen/klemmen zu können, bevor das Brustbein den Abweiserkopf erreicht. Das Brustbein wird trotz des geklemmten Fleischstreifens, die Zangenbacken klemmen und halten lediglich den Fleischstreifen, durch die Zangenbacken hindurchtransportiert und lenkt das Abweiserelement damit zunehmend aus der Förderstrecke der Geflügelkarkassen.

Vorteilhafterweise ist der Greifzange ein pneumatischer Antrieb zum pneumatischen Schließen und Öffnen der Zangenbacken zugeordnet, wobei die Schwenkbewegungen der Zangenbacken aufeinander zu und voneinander weg relativ zum Abweiserelement ausführbar sind. Die Greifzange wartet mit geöffneten Zangenbacken, bis die Spitze des Brustbeins, also das Brustbeinhorn mit dem angelösten Fleischstreifen, zwischen die Zangenbacken einläuft. Diese werden dann pneumatisch angetrieben geschlossen. Dadurch, dass die Geflügelkarkasse weitertransportiert wird, während die Greifzange in Transportrichtung T feststehend ist, beginnt das Abziehen des Fleischstreifens. Durch den Weitertransport stößt das Brustbein gegen das Abweiserelement, das schwenkend ausweicht und das Abziehen unterstützt und beschleunigt, da der Fleischstreifen zusätzlich vom Brustbein weggezogen wird.

Besonders bevorzugt weisen die beiden Zangenbacken auf ihren einander zugewandten Innenflächen eine Profilierung auf, wobei die Profilierung vorzugsweise aus einem Längsschliff der Innenflächen gebildet ist, derart, dass Profilriefen in der Ausgangsposition des Ablöseelementes im Wesentlichen parallel zur Längsachse L_{SK} des Stützkörpers bzw. im Wesentlichen parallel zur Transportrichtung T verlaufen. Mit dieser Profilierung wird sichergestellt, dass einerseits eine hohe Klemmwirkung des Fleischstreifens gewährleistet ist, und andererseits das Hindurchtransportieren bzw. das Gleiten des Brustbeins durch die sich in Klemmposition befindlichen Zangenbacken ermöglicht ist. Vorzugsweise sind die Innenflächen groß und breit gewählt, so dass ein Zeitfenster existiert, in dem die Klemmung erfolgen kann. Mit anderen Worten sind die Zangenbacken derart breit gewählt, dass der Zeitpunkt bzw. das Zeitfenster zum Bewegen in die Klemmposition freier wählbar ist und ein Erfassen des losen Endes des Fleischstreifens gewährleistet ist.

Optional ist weiterhin ein Klappenelement vorgesehen, das federbelastet ausgebildet und entlang der Förderstrecke derart angeordnet ist, dass es mit dem bereits teilweise vom Brustbeinkamm abgezogenen Fleischstreifen in Eingriff bringbar ist. Die in der Förderstrecke der Geflügelkarkassen stehende Klappe trennt die nahezu vollständig abgelösten Fleischstreifen, die noch von der Greifzange gehalten werden, endgültig und vollständig vom Brustbein. Die Klappe übt dabei einen zusätzlichen Druck auf den abzulösenden Fleischstreifen aus, der zum vollständigen Trennen des Fleischstreifens beiträgt. Die Klappe kann produktgesteuert z.B. gegen eine Federkraft oder aktiv z.B. mittels eines pneumatischen Antriebs gesteuert ausgebildet sein.

Vorteilhafterweise sind die Schwenkachsen S_{AE} des Anlöseelementes und S_{GA} des Ablöseelementes quer zur Transportrichtung T ausgerichtet. Die Schwenkachsen S_{AE} und S_{GA} verlaufen bevorzugt parallel zueinander. Die Schwenkachse S_{GA} des Abweiserelementes liegt dabei in Transportrichtung T hinter der Schwenkachse S_{AE} des Anlöseelementes und quer zur Transportrichtung T vorzugsweise näher an der zu verarbeitenden Geflügelkarkasse als die Schwenkachse S_{AE} des Anlöseelementes.

Eine weitere bevorzugte Ausführungsform ist dadurch gekennzeichnet, dass das Ablöseelement zwei Klemmbacken umfasst, wobei mindestens eine der Klemmbacken relativ zur zweiten Klemmbacke bewegbar ausgebildet ist. Damit ist ein einfaches und kostengünstiges Werkzeug zum endgültigen und vollständigen Ablösen des Fleischstreifens geschaffen, das ohne aktive Ansteuerungsmittel auskommt.

Vorteilhafterweise ist eine erste Klemmbacke ortsfest und stationär ausgebildet, und die zweite Klemmbacke ist relativ zur ersten Klemmbacke bewegbar ausgebildet. Es können auch beide Klemmbacken bewegbar ausgebildet sein. Besonders einfach und effektiv ist jedoch eine Ausbildung des Ablöseelementes, bei der die eine Klemmbacke fest mit einem Gehäuse, einem Rahmen oder dergleichen verbunden oder einstückig mit diesem ausgebildet ist, während die zweite Klemmbacke relativ zur ersten Klemmbacke bewegbar, nämlich z.B. schwenkbar, kippbar, drehbar oder z.B. auch in einer überlagerten Linear- und Schwenkbewegung verstellbar ist. Dadurch kann der zu lösende Fleischstreifen zuverlässig aufgenommen, gehalten und letztlich vom Brustbeinkamm abgerissen werden.

Eine bevorzugte Weiterbildung dieser Ausführungsform ist dadurch gekennzeichnet, dass die oder jede bewegbare Klemmbacke mittels mindestens eines Federelementes federgespannt in einer Aufnahmeposition zum Aufnehmen des Brustbeinkamms zwischen den beiden Klemmbacken gehalten ist, wobei die bewegbare Klemmbacke produktgesteuert gegen die Federkraft des Federelementes relativ zur ortsfesten Klemmbacke auslenkbar ausgebildet und eingerichtet ist. Das erfindungsgemäße Ablöseelement kann auf aktive Ansteuerungsmittel verzichten. Die oder jede bewegbar ausgebildete Klemmbacke ist alleine produktgesteuert ansteuerbar. In der Variante, in der die eine Klemmbacke ortsfest ausgebildet ist und die andere Klemmbacke bewegbar, bildet die ortsfeste, vorzugsweise untere Klemmbacke eine feste Auflage für den Brustbeinkamm, während die bewegbare, vorzugsweise obere Klemmbacke den Brustbeinkamm auf die ortsfeste Klemmbacke drückt. Der zwischen die beiden Klemmbacken einführbare Brustbeinkamm ist dadurch sicher geführt. Durch die Federspannung ist die obere Klemmbacke produktgesteuert ausweichbar ausgebildet und ermöglicht somit eine Anpassung an den Brustbeinkamm, insbesondere an dessen Größe, Dicke, Länge, Kontur und dergleichen. Durch die beschriebene Ausbildung und Anordnung der Klemmbacken ist eine gleichmäßige und angepasste Anlage der beiden Klemmbacken am Brustbeinkamm gewährleistet, wobei der Brustbeinkamm in paralleler Ausrichtung zur Transportrichtung T zwischen die beiden Klemmbacken führbar ist.

Als Klemmbacken eignen sich unterschiedliche Klemmkörper, die dazu ausgebildet und eingerichtet sind, den Fleischstreifen oder Teile davon aufnehmen, greifen und halten zu können. Vorteilhafterweise sind die beiden Klemmbacken durch zwei separate Blechkörper gebildet, die zur Bildung eines Spaltes zum Aufnehmen des Brustbeinkamms mit ihren schmalen Kanten einander gegenüberliegend angeordnet sind, derart, dass ein parallel zur Transportrichtung T transportiertes Brustbein der Geflügelkarkasse an einem Brustbeinansatz zwischen dem Brustbeinkamm und einem Brustbeinsteg in den Spalt einführbar ist. Die Blechkörper weisen eine gegenüber ihrer flächigen Ausdehnung geringe Dicke auf. Somit bilden Schnittkanten der Blechkörper die schmalen (Stirn-) Kanten. Diese schmalen Kanten der beiden Blechkörper liegen in der Aufnahmeposition, in der die Blechkörper noch auf das Einführen eines Brustbeinkamms warten, aufeinander, allenfalls mit einem Spalt mit einem Spaltmaß vorzugsweise kleiner 1mm.

In einer bevorzugten Ausführungsform sind die Klemmbacken bzw. die Blechkörper derart ausgebildet und eingerichtet, dass sie in der Aufnahmeposition entgegen der in Transportrichtung T einlaufenden Geflügelkörper bzw. der Teile davon aufweitend geformt sind. Die Klemmbacken bzw. Blechkörper bilden durch eine Formung oder Ausnehmung einen in Transportrichtung T trichterförmig aufeinander zu laufenden Zuführbereich, mittels dem das Brustbein bzw. der Brustbeinkamm sicher und zuverlässig in den Spalt einführbar ist. Die Klemmbacken bzw. Blechkörper weisen demnach in ihrer Aufnahmeposition in dem Zuführbereich einen größeren Abstand zueinander auf als in einem dem Zuführbereich nachfolgenden Klemmbereich.

Vorzugsweise ist die bewegbare Klemmbacke bzw. der bewegbare Blechkörper um eine Drehachse D aus einer Aufnahmeposition in eine Halteposition und zurück drehbar ausgebildet und eingerichtet. Die bewegbare Klemmbacke bzw. der bewegbare Blechkörper ist bügel- bzw. griffartig als Klemmbügel ausgebildet und geformt und an einer drehbaren Welle befestigt. Das Federelement, das zwischen dem Klemmbügel und einem Gehäuseteil, Rahmen oder dergleichen gespannt ist, hält den Klemmbügel in der Aufnahmeposition.

Vorteilhafterweise ist die Drehachse D der bewegbaren Klemmbacke bzw. des bewegbaren Blechkörpers, und insbesondere auch der Welle, parallel zur Transportrichtung T der einlaufenden Geflügelkörper bzw. der Teile davon ausgerichtet, derart, dass die Ausgleichs- bzw. Anpassbewegung des Klemmbügels bezogen auf die Transportrichtung T nach oben bzw. nach unten erfolgt. Ist ein Brustbeinkamm in den Spalt zwischen den Blechkörpern eingeführt, ist der Klemmbügel nach oben ausgelenkt. Nachdem der Brustbeinkamm aus dem Ablöseelement heraustransportiert ist, führt das Federelement dazu, dass der Klemmbügel wieder in Richtung der ortsfesten Klemmbacke gezogen wird.

Eine bevorzugte Ausführungsform des Ablöseelementes ist dadurch gekennzeichnet, dass die Klemmbacken bzw. die Blechkörper in Transportrichtung T der einlaufenden Geflügelkörper bzw. der Teile davon mit einem ersten Abschnitt im Wesentlichen parallel zur Transportrichtung T und parallel zum Brustbeinansatz zwischen dem Brustbeinkamm und dem Brustbeinsteg ausgerichtet sind, während mindestens ein zweiter Abschnitt in einem Winkel β zur Transportrichtung T und zum Brustbeinansatz zwischen dem Brustbeinkamm und dem Brustbeinsteg mit β > 0 von einem durch in Transportrichtung T der Geflügelkörper oder der Teile davon definierten Transportpfad weglaufend ausgerichtet ist. Liegen die Blechkörper im ersten Abschnitt noch parallel zum Brustbeinansatz, vergrößert sich der Abstand vorzugsweise kontinuierlich im zweiten Abschnitt. Dadurch wird der Brustbeinkamm mindestens ab dem zweiten Abschnitt mit dem Weitertransport aus dem Spalt zwischen den Blechkörpern herausbewegt, während der Fleischstreifen durch die Blechkörper "gefangen" und letztlich vom Brustbeinkamm abgerissen wird. Der Brustbeinansatz verläuft entlang einer imaginären Linie, die parallel zur Transportrichtung T ausgerichtet ist.

Vorteilhafterweise ist ein dritter Abschnitt der Klemmbacken bzw. der Blechkörper in einem Winkel α zur Transportrichtung T und zum Brustbeinansatz zwischen dem Brustbeinkamm und dem Brustbeinsteg mit α > β vom Transportpfad weglaufend ausgerichtet, wobei die ersten und zweiten und dritten Abschnitte einer Klemmbacke bzw. eines Blechkörpers jeweils in Transportrichtung T hintereinander angeordnet und einstückig miteinander verbunden sind. Die drei Abschnitte einer Klemmbacke bzw. eines Blechkörpers bilden demnach einerseits eine Führung für den Brustbeinkamm und andererseits eine Abstreifführung zum Ablösen des Fleischstreifens vom Brustbeinkamm. Es können auch mehr als drei Abschnitte mit einem variablen Winkel zur Transportrichtung T und zum Brustbeinansatz vorgesehen sein.

Zweckmäßigerweise sind die beiden das Ablöseelement bildenden Klemmbacken bzw. Blechkörper in Transportrichtung T gleichgerichtet verlaufend ausgebildet.

Zweckmäßigerweise ist die Federkraft des Anlöseelementes und/oder die Federkraft des Ablöseelementes einstellbar ausgebildet, wodurch eine individuelle Einstellung realisiert ist, um die Fleischstreifen ausbeuteeffizient gewinnen zu können.

Eine zweckmäßige Weiterbildung ist dadurch gekennzeichnet, dass weitere Bearbeitungsstationen als Ritzeeinheit zum Einritzen der Haut, als Enthäuteeinheit zum Entfernen der Haut, als Sehnentrenneinheit, als Einheit zum Trennen der Gabelbeine, als Filetiereinheit zum Lösen und Trennen der Brustfilets von der Geflügelkarkasse, als Einheit zum Gewinnen des seitlich am Brustbein befindlichen Restfleisches sowie als Einheit zum Gewinnen von Teilen des Brustbeins, die auch die knorpeligen Bereiche des Brustbeins oder Teile davon umfassen, ausgebildet sein können bzw. sind. Damit ist letztlich eine vollständige Filetiermaschine beschrieben und beansprucht, wobei die Anzahl und/oder Auswahl der Bearbeitungsstationen variiert und ergänzt werden kann. Mit der erfindungsgemäßen Ausbildung ist eine besonders effiziente und produktschonende Verarbeitung der Geflügelkörper oder Teilen davon mit maximaler Ausbeute gewährleistet, und zwar produktgrößenunabhängig.

Besonders bevorzugt umfasst die Vorrichtung eine Steuereinheit, die zum Steuern des Förderers einschließlich der den Stützkörper umfassenden Haltevorrichtung sowie der oder jeder Bearbeitungsstation ausgebildet und eingerichtet ist. Damit werden die zuvor beschriebenen Vorteile unterstützt, insbesondere auch eine automatisierte Verarbeitung sichergestellt.

Die Aufgabe wird auch durch ein Verfahren mit den eingangs genannten Schritten dadurch gelöst, dass der Fleischstreifen mittels der Löseeinheit in zwei separaten und nacheinander ausgeführten Schritten vom Brustbeinkamm der Geflügelkarkasse abgelöst wird. Die Schritte, die zwar aufeinander abgestimmt sind, jedoch zeitlich und räumlich getrennt voneinander ausgeführt werden, ermöglichen zum einen, dass einfache und damit günstige Werkzeuge eingesetzt werden können, und zum anderen, dass die Fleischstreifen einfach und zuverlässig vom Brustbein abgelöst werden können. Die Zweistufigkeit bei der Entfernung des Fleischstreifens vereinfacht des Weiteren das Verarbeiten von Geflügelkörpern unterschiedlicher Größe.

In einem ersten Anlöseschritt wird der Fleischstreifen im Bereich eines in Transportrichtung T vorauslaufenden Brustbeinhorns des Brustbeins angelöst, indem die zwischen dem Fleisch und dem Brustbein befindliche Membran am Brustbeinhorn eingeschnitten wird, während in einem zweiten Ablöseschritt das eingeschnittene freie Ende des Fleischstreifens gegriffen und in Längsrichtung des Brustbeinkamms von diesem abgezogen wird. Durch das Einschneiden ergibt sich ein freies Ende des Fleischstreifens, das dann einfach gegriffen und abgezogen werden kann.

Vorteilhafterweise wird für den Anlöseschritt der Einschnitt in den Fleischstreifen im Bereich des Brustbeinhorns zum Anlösen des Fleischstreifens durch eine Klinge in einem spitzen Winkel β, der zwischen einer Längsachse L_{SK} eines die Geflügelkarkasse tragenden Stützkörpers und einer Längsachse L_{K} einer den Einschnitt ausführenden Klinge gebildet ist, ausgeführt. Die Klinge trifft mit einer geschärften Schneidkante auf das Brustbeinhorn, wodurch das lose Ende entsteht und dieses durch die Klinge angehoben wird. Dieser Vorbereitungsschritt vereinfacht das nachfolgende Greifen und Abziehen des Fleischstreifens. Das Anlösen kann aber auch durch die Greifzange selbst ausgeführt werden, indem eine scharfe Kante der Greifzange den Fleischstreifen anlöst, bevor die Greifzange den angelösten Fleischstreifen klemmt und abzieht.

Eine bevorzugte Weiterbildung ist dadurch gekennzeichnet, dass die Klinge in ihrer Ausgangsposition durch den Transport der Geflügelkarkasse in Transportrichtung T mit dem Brustbeinhorn in Eingriff gebracht wird, die Klinge dann produktgesteuert geführt wird, wobei der Druck der Klinge auf das Brustbeinhorn durch den weiteren Transport in Transportrichtung T zunimmt, und die Klinge in ihre Ausgangsposition zurückbewegt wird, sobald sich die Klinge durch den weiteren Transport in Transportrichtung T außer Eingriff mit der Geflügelkarkasse befindet. Dadurch, dass die Klinge produktgesteuert geführt wird, können Geflügelkörper unterschiedlicher Größe mit gleichbleibend hoher Qualität verarbeitet werden.

Zweckmäßigerweise wird die Klinge über einen Schwenkhebel durch das Brustbein der Geflügelkarkasse gegen eine Federspannung ausgelenkt, um außer Eingriff durch die Federspannung in ihre Ausgangsposition gegen einen Anschlag zurückbewegt zu werden. Dadurch befindet sich der Schwenkhebel mit der Klinge nach dem Einschnitt selbsttätig wieder in einer Position, um den nächsten Geflügelkörper zu "empfangen".

Eine besonders bevorzugte Ausführung ist dadurch gekennzeichnet, dass für den Ablöseschritt zum Ablösen des bereits angelösten Fleischstreifens das freie Ende desselben zwischen zwei Zangenbacken einer Greifzange geklemmt wird, und der geklemmte Fleischstreifen durch ein produktgesteuertes Abweiserelement in Längsrichtung mindestens teilweise vom Brustbeinkamm gezogen wird. Dadurch, dass die Greifzange in Transportrichtung T feststehend ist, führt der Weitertransport der Geflügelkarkasse in Transportrichtung T dazu, dass der gegriffene Fleischstreifen bedingt durch die Relativbewegung vom Brustbeinkamm gezogen wird. Das produktgesteuerte Abweiserelement führt dazu, dass sich der Abstand der Greifzange zum Brustbeinkamm vergrößert, wodurch das Abziehen unterstützt und beschleunigt wird. Bevorzugt führt diese Verfahrensweise zum vollständigen Ablösen des Fleischstreifens. In einzelnen Fällen kann es schwierig sein, den Fleischstreifen vollständig abzulösen, da die nachfolgend antransportierte Geflügelkarkasse die Greifzange dazu "zwingt", in ihre geöffnete Ausgangsposition zurückzukehren. Für diese Fälle sieht die Erfindung zusätzliche beschleunigende Schritte zum vollständigen Ablösen vor, die nachstehend beschrieben sind.

Vorteilhafterweise werden die Zangenbacken der Greifzange mittels eines pneumatischen Antriebs geschlossen und geöffnet, wobei die Greifzange in ihrer Klemmposition produktgesteuert über das Abweiserelement vom Brustbein wegbewegt wird. Der pneumatische Antrieb ermöglicht ein schnelles und präzises Schließen und Öffnen der Zangenbacken.

Vorteilhafterweise werden die Greifzange bzw. die beiden Zangenbacken in Abhängigkeit der Position des die Geflügelkarkasse tragenden Stützkörpers entlang der Förderstrecke aktiv zu und auf gesteuert.

Dazu warten die Zangenbacken der Greifzange in einer geöffneten Warteposition entlang der Förderstrecke, bis die Spitze des Brustbeins in Form des Brustbeinhorns mit dem angelösten Fleischstreifen in die geöffnete Greifzange einläuft, um die Zangenbacken dann pneumatisch gesteuert in ihre Klemmposition zum Klemmen des freien Endes des Fleischstreifens zu bewegen. Aufgrund der Ausbildung der Greifzange bzw. der Zangenbacken kann die Klemmung, also das Schließen der Zangenbacken auch in einem Zeitfenster erfolgen. Das Steuern kann über eine Steuerung erfolgen, an die z.B. neben Antrieben eines umlaufenden Förderers auch Sensoren zur Überwachung der Position der Geflügelkörper entlang der Förderstrecke und/oder andere Detektions- und/oder Messmittel zum Erkennen und/oder Berechnen der jeweiligen Position des Brustbeins des Geflügelkörpers angeschlossen sind.

Bevorzugt wird die geschlossene und den Fleischstreifen klemmende Greifzange während des Transports in Transportrichtung T produktgesteuert vom Brustbein wegbewegt, indem das federgespannte Abweiserelement durch das Brustbein ausgelenkt wird, sobald das Brustbein das Abweiserelement erreicht, bis der Fleischstreifen mindestens teilweise vom Brustbeinkamm abgelöst ist. Anschließend werden die Zangenbacken nach dem mindestens teilweisen Ablösen des Fleischstreifens aktiv geöffnet und das aus Greifzange und Abweiserelement gebildete Ablöseelement federgespannt in seine Warteposition mit geöffneten Zangenbacken bewegt. Die abgelösten Fleischstreifen können abgeführt und weiterverarbeitet werden.

Wie bereits beschrieben, wird der Fleischstreifen vorzugsweise vollständig durch die vorstehenden Verfahrensschritte vom Brustbein abgelöst. Für den Fall, dass aufgrund einer engen Taktung der in Transportrichtung T transportierten Haltevorrichtungen mit den darauf angeordneten Geflügelkarkassen das Anlöseelement einerseits und insbesondere das Ablöseelement andererseits schneller in ihre Ausgangsposition zurück bewegt werden müssen, bevor der Fleischstreifen vollständig abgelöst ist, kann das vollständige Ablösen bei noch geklemmtem Fleischstreifen beschleunigt, der Prozess also abgekürzt werden, indem der Stützkörper mit noch in der Greifzange geklemmtem Fleischstreifen aus einer Ausrichtung, in der dieser zum Anlösen und Abziehen des Fleischstreifens mit seiner Längsachse L_{SK} parallel zur Transportrichtung T der Haltevorrichtungen ausgerichtet ist, um eine Drehachse D_{SK}, die quer zur Transportrichtung T ausgerichtet ist, gedreht wird, um den angelösten und mindestens teilweise abgelösten Fleischstreifen vollständig von der Geflügelkarkasse zu reißen. In anderen Optionen kann der bereits teilweise abgezogene Fleischstreifen durch eine Klappe oder dergleichen, die entlang der Förderstrecke der zu verarbeitenden Geflügelkarkasse "im Weg" steht, vollständig abgelöst werden. Die Klappe übt zusätzlichen Druck auf den Fleischstreifen aus und unterstützt und beschleunigt das Ablösen.

Zum Ablösen des bereits angelösten Fleischstreifens kann die Geflügelkarkasse mit dem Brustbeinkamm zwischen zwei Klemmbacken eingeführt werden. Konkret wird die Geflügelkarkasse mit dem Bereich eines Brustbeinansatzes zwischen dem Brustbeinkamm und einem Brustbeinsteg parallel zur Transportrichtung T in einen zwischen zwei Blechkörpern als Klemmbacken gebildeten Spalt eingeführt, so dass sich die Blechkörper zwischen dem angelösten Fleischstreifen und dem Brustbeinsteg befinden. Es erfolgt damit eine räumliche Trennung von Fleischstreifen einerseits und Brustbeinsteg andererseits, so dass der Brustbeinkamm einem anderen Transportpfad folgen kann, nämlich weiter in Transportrichtung T, als der Fleischstreifen, der von den Klemmbacken schräg nach außen und weg vom Brustbeinkamm geschoben und letztlich am Weitertransport gehindert wird.

Dazu wird der angelöste Fleischstreifen beim Transport der Geflügelkarkasse in Transportrichtung T von den Blechkörpern zunächst in Richtung einer freien Kante des Brustbeinkamms bewegt und letztlich in Transportrichtung T aufgehalten, so dass der Fleischstreifen beim Weitertransport der Geflügelkarkasse in Transportrichtung T aus der Löseeinheit heraus festgehalten und vollständig vom Brustbeinkamm abgerissen wird.

Während der Brustbeinkamm zwischen den Klemmbacken bzw. den Blechkörpern entlangtransportiert wird, wird mindestens ein Blechkörper produktgesteuert vom zweiten Blechkörper wegbewegt, so dass die Blechkörper einen Spalt zwischen sich bilden und zu beiden Seiten des Brustbeinkamms am Brustbeinansatz anliegen, wobei sich der Spalt zwischen den beiden Blechkörpern schließt und den Fleischstreifen hält, sobald der Brustbeinkamm die Löseeinheit verlässt.

Die Fleischstreifen werden also in Transportrichtung T von den Blechkörpern am Weitertransport gehindert. Wenn der Brustbeinkamm die Löseeinheit vollständig verlassen hat, hängen die gelösten Fleischstreifen zwischen den Blechkörpern eingeklemmt. Die von den Blechkörpern gehaltenen und vollständig vom Brustbeinkamm gelösten Fleischstreifen werden dann jeweils von nachfolgend gelösten Fleischstreifen aus ihrer Halterung gedrückt und abtransportiert. Dazu können die Fleischstreifen z.B. über eine Rutsche in eine Transportkiste fallen.

Besonders bevorzugt wird das Verfahren mit einer Vorrichtung nach einem oder mehreren der Ansprüche 1 bis 32 ausgeführt. Die sich daraus ergebenden Vorteile wurden bereits im Zusammenhang mit der Vorrichtung ausführlich beschrieben, weshalb zur Vermeidung von Wiederholungen auf die entsprechenden Passagen verwiesen wird.

Weitere zweckmäßige und/oder vorteilhafte Merkmale und Weiterbildungen zu der Vorrichtung und zum Verfahren ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung einer bevorzugten Ausführungsform einer erfindungsgemäßen Vorrichtung in einer Ansicht von unten,
- Fig. 2: die Vorrichtung gemäß Figur 1 in einer Ansicht von schräg unten,

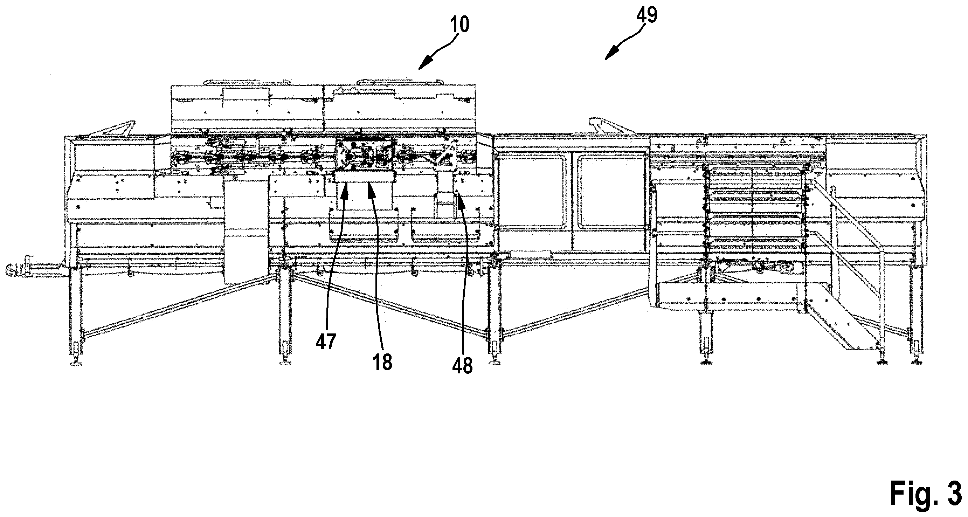

- Fig. 3: eine schematische Darstellung einer Gesamtanlage zum Verarbeiten von Geflügelkörpern mit einer erfindungsgemäßen Vorrichtung in einer Ansicht von hinten,

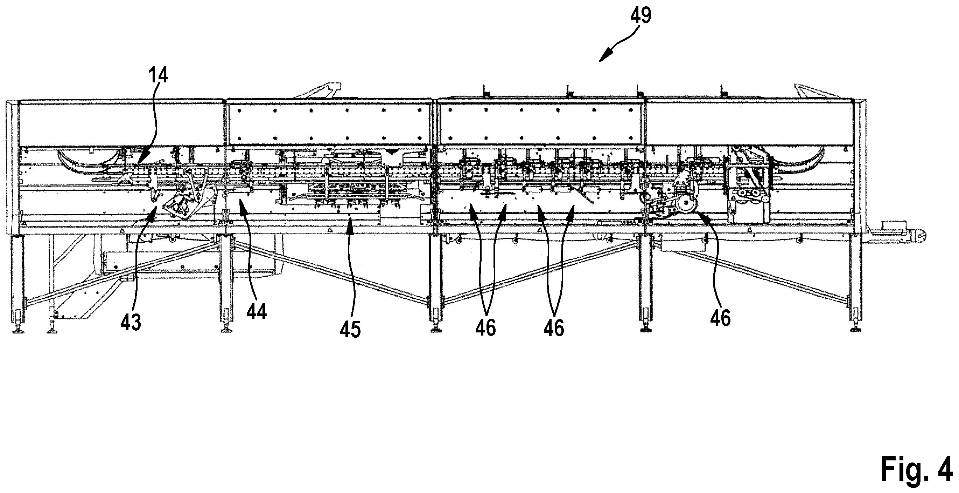

- Fig. 4: eine schematische Darstellung einer Gesamtanlage zum Verarbeiten von Geflügelkörpern mit einer erfindungsgemäßen Vorrichtung in einer Ansicht von vorne,
- Fig. 5: eine schematische Darstellung eines alternativen Ablöseelementes in perspektivischer Ansicht, und
- Fig. 6: eine Löseeinheit mit dem Ablöseelement gemäß Figur 5.

Die in der Zeichnung dargestellte Vorrichtung dient zum Verarbeiten von Brustkappen geschlachteter Geflügelkörper, nämlich insbesondere zum Ablösen von sich an einem Brustbeinkamm einer Geflügelkarkasse befindlichen Fleischstreifen von bereits von Brustfilets befreiten Geflügelkarkassen. In entsprechender Weise dient die Vorrichtung auch zum Verarbeiten von Vorderhälften geschlachteter Geflügelkörper oder anderen noch das Brustbein umfassenden Teilen geschlachteter Geflügelkörper.

Die Erfindung betrifft eine Vorrichtung 10, ausgebildet und eingerichtet zum Ablösen von sich an einem Brustbeinkamm 11 einer Geflügelkarkasse 12 befindlichen Fleischstreifen 13 von bereits von Brustfilets befreiten Geflügelkarkassen 12 geschlachteter Geflügelkörper oder Teilen davon, umfassend einen umlaufenden Förderer 14 mit mindestens einer Haltevorrichtung 15 mit einem Stützkörper 16 zum Aufnehmen und Halten der Geflügelkörper bzw. der Teile davon während des Transports in Transportrichtung T durch die Vorrichtung 10, sowie mindestens eine Bearbeitungsstation 17 entlang einer Förderstrecke des Förderers 14, wobei eine der Bearbeitungsstationen 17 als Löseeinheit 18 zum Ablösen des Fleischstreifens 13 vom Brustbeinkamm 11 ausgebildet ist.

Diese Vorrichtung 10 zeichnet sich erfindungsgemäß dadurch aus, dass die Löseeinheit 18 ein Anlöseelement 19 und ein Ablöseelement 20 umfasst, wobei das Anlöseelement 19 zum Einschneiden des Fleischstreifens 13 im Bereich eines in Transportrichtung T vorauslaufenden Brustbeinhorns 21 des Brustbeinkamms 11 und das Ablöseelement 20 zum Greifen und Abziehen des Fleischstreifens 13 vom Brustbeinkamm 11 ausgebildet und eingerichtet ist.

Die im Folgenden beschriebenen Merkmale und Weiterbildungen stellen für sich betrachtet oder in Kombination miteinander bevorzugte Ausführungsformen der Vorrichtung 10 dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Der Förderer 14 ist vorzugsweise eine endlose Förderkette, die um Umlenkelemente geführt ist. Die Umlenkelemente können als Antriebs- und/oder Führungskörper ausgebildet sein. Die Umlenkelemente sind um Drehachsen drehbar, wobei die Ausrichtung der Drehachsen variieren kann. Beispielsweise können die Drehachsen horizontal ausgerichtet sein, so dass die Förderkette einen Obertrum und einen Untertrum bildet. In der dargestellten Ausführungsform sind die Drehachsen geneigt zur Vertikalen ausgerichtet. An der Förderkette sind bevorzugt eine Vielzahl von Haltevorrichtungen mit einem definierten Abstand zueinander angeordnet.

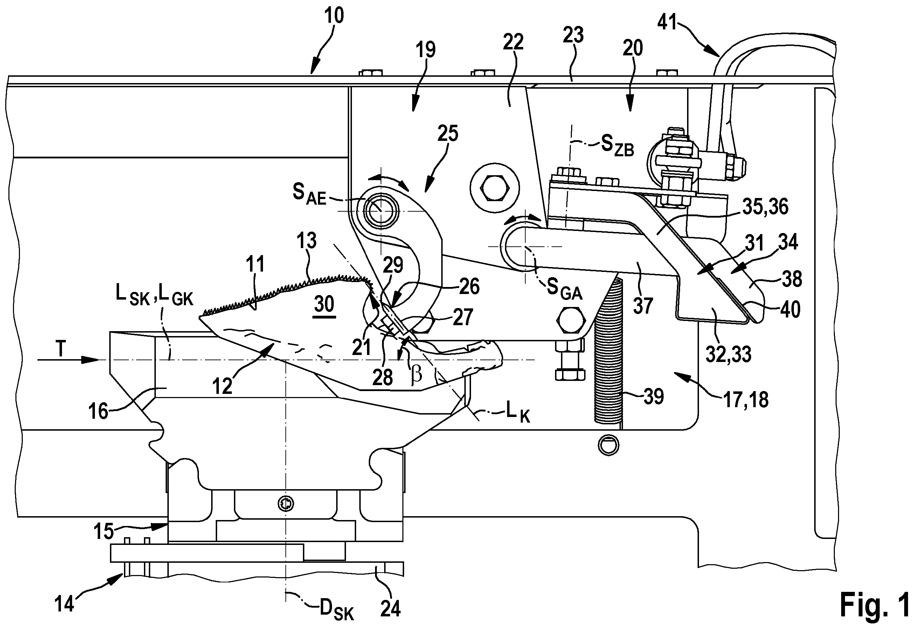

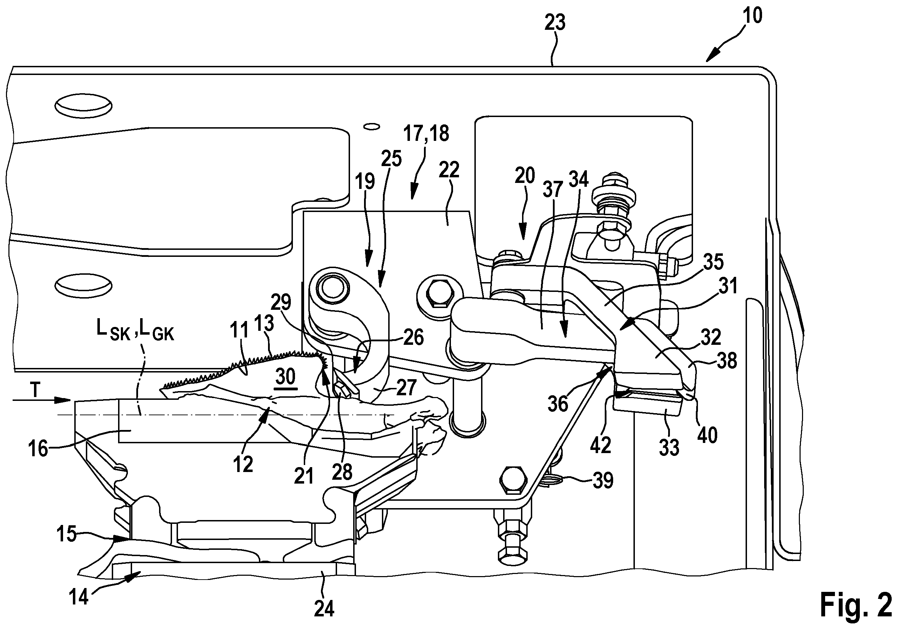

Wie in den Figuren 1 und 2 dargestellt, sind in der bevorzugten Ausführungsform das Anlöseelement 19 und das Ablöseelement 20 separate Werkzeuge, die zur Ausführung separater und nacheinander ausführbarer Arbeitsschritte ausgebildet und eingerichtet sind. In anderen Ausführungsformen können das Anlöseelement 19 und das Ablöseelement 20 auch als gemeinsames Kombinationswerkzeug ausgebildet sein. Das Anlöseelement 19 und das Ablöseelement 20 sind in der gezeigten Ausführungsform an einem gemeinsamen Grundkörper 22 angeordnet, wobei das Ablöseelement 20 in Transportrichtung T hinter dem Anlöseelement 19 angeordnet ist. Der Grundkörper 22 ist lösbar an einem Rahmen 23, Gehäuse oder dergleichen der Vorrichtung 10 befestigt. Die Löseeinheit 18 ist derart am Rahmen 23 angeordnet, dass die Werkzeuge, also das Anlöseelement 19 und das Ablöseelement 20, in die Förderstrecke ragen, so dass in den Arbeitsbereich der Löseeinheit 18 einlaufende Haltevorrichtungen 15 die Geflügelkarkassen 12 zwangsläufig in Kontakt mit den Werkzeugen bringen.

Grundsätzlich weisen die Haltevorrichtungen 15 mit den Stützkörpern 16 eine Orientierung auf, in der die auf den Stützvorrichtungen 16 gehaltenen Geflügelkarkassen 12 in ihrer Längsrichtung durch die Löseeinheit 18 transportiert werden. Spätestens beim Einlaufen der Haltevorrichtungen 15 in den Arbeitsbereich der Löseeinheit 18 ist die Längsachse L_{SK} des Stützkörpers 16 (und damit auch die Längsachse L_{GK} der Geflügelkarkasse 12) parallel zur Transportrichtung T ausgerichtet, so dass sich auch der abzulösende Fleischstreifen 13 in einer Längserstreckung parallel zur Transportrichtung T befindet. Zum Verändern der Orientierung der Haltevorrichtungen 15 mit den Stützkörpern 16 ist der Stützkörper 16 - direkt oder indirekt - vorzugsweise um eine Drehachse D_{SK}, die im Wesentlichen quer zur Transportrichtung T ausgerichtet ist, drehbar ausgebildet. Im Bereich der Löseeinheit 18 weist der Stützkörper 16 zumindest zu Beginn der Verarbeitung eine Position auf, in der die Längsachse L_{SK} des Stützkörpers parallel zur Transportrichtung T ausgerichtet ist. Im Verlauf der Verarbeitung auch in der Löseeinheit 18 selbst ist eine Veränderung der Orientierung gewährleistet, vorzugsweise dadurch, dass die Haltevorrichtung 15 mittels geeigneter Betätigungs- oder Antriebsmittel relativ zu einer Förderkette 24 des Förderers 14 drehbar ausgebildet ist.

Das Anlöseelement 19 umfasst einen Schwenkhebel 25, an dessen freiem Ende 26 eine Klinge 27 angeordnet ist. Der Schwenkhebel 25 ist gekrümmt ausgebildet, vorzugsweise nahezu halbkreisförmig, so dass der hakenförmige Schwenkhebel 25 mit seinem freien Ende 26 in den Förderweg der Geflügelkarkassen 12 ragt. An dem freien Ende 26 des Schwenkhebels 25 ist die in der dargestellten Ausführungsform linear ausgebildete Klinge 27 mittels einer Schraube 28 lösbar befestigt. Die Klinge 27 weist an ihrem der Transportrichtung T entgegengerichteten Ende eine geschärfte Schneidkante 29 auf. Der Schwenkhebel 25 ist mit der Klinge 27 schwenkbar um eine Schwenkachse S_{AE} am Grundkörper 22 gelagert. Die Schwenkachse S_{AE} ist vorzugsweise quer zur Transportrichtung T ausgerichtet.

In den Figuren 1 und 2 steht der Schwenkhebel 25 in seiner Ausgangsposition. In der Ausgangsposition steht der Schwenkhebel 25 federgespannt - vorzugsweise durch ein nicht explizit dargestelltes Federelement - gegen einen einstellbaren Anschlag, der ebenfalls nicht explizit dargestellt ist, derart, dass die mittels des Förderers 14 entlang der Förderstrecke in Transportrichtung T transportierten Geflügelkarkassen 12 mit dem Brustbein 30 zwangsläufig in Eingriff mit dem in der Ausgangsposition stehenden Schwenkhebel 25 und dessen daran angeordneter Klinge 27 gelangen. Genauer trifft die Geflügelkarkasse 12 beim Weitertransport in Transportrichtung T mit ihrem Brustbeinhorn 21 auf die Schneidkante 29 der Klinge 27.

Die Klinge 27 am freien Ende 26 des Schwenkhebels 25 ist in dessen Ausgangsposition in einem Winkel β zur zu verarbeitenden Geflügelkarkasse 12 ausgerichtet, derart, dass die Spitze, also die geschärfte Schneidkante 29, der Klinge 27 auf das Brustbeinhorn 21 gerichtet ist. Der Winkel β bzw. dessen Größe ist variabel und z.B. mittels des einstellbaren Anschlags veränderbar. Der zwischen der Längsachse L_{SK} des Stützkörpers 16 und der Längsachse L_{K} der Klinge 27 eingeschlossene Winkel β ist größer 0° und kleiner 90° und beträgt bevorzugt zwischen 20° und 60° und besonders bevorzugt etwa 45°.

Der schwenkbar gelagerte und federgespannte Schwenkhebel 25 ist produktgesteuert gegen die Federkraft auslenkbar ausgebildet. Sobald die Schneidkante 29 der Klinge 27 in Kontakt mit dem Brustbeinhorn 21 steht, führt der Weitertransport in Transportrichtung T zwangsläufig zum Auslenken des Schwenkhebels 25. Dadurch, dass die Schneidkante 29 in der Ansicht gemäß den Figuren 1 und 2 von schräg unten am Brustbeinhorn 21 angreift, führt der Weitertransport in Transportrichtung T zum einen dazu, dass der Druck der Schneidkante 29 in den Fleischstreifen 13 im Bereich des Brustbeinhorns 21 zunimmt, so dass der Fleischstreifen 13 mit einem dann freien Ende vom Brustbeinkamm 11 angelöst wird. Zum anderen hebelt die Schneidkante 29 das lose Ende des Fleischstreifens 13 beim Weitertransport nach oben, damit das lose Ende einfach gegriffen werden kann. Sobald der Kontakt zwischen Geflügelkarkasse 12 und Anlöseelement 19 durch den Weitertransport der Geflügelkarkasse 12 in Transportrichtung T aufgehoben ist, bewegt sich das Anlöseelement 19 selbsttätig durch die Federkraft zurück in die Ausgangsposition. Die Federkraft des Anlöseelementes 19 ist einstellbar, z.B. durch Austausch des Federelementes oder auf andere Weise.

Das Ablöseelement 20 umfasst in einer ersten Ausführungsform eine Greifzange 31 mit einem Paar Zangenbacken 32, 33 sowie ein Abweiserelement 34, wobei die Greifzange 31 in Transportrichtung T vor dem Abweiserelement 34 positioniert ist. Die Positionierung bezieht sich auf die Funktionsteile von Greifzange 31 und Abweiserelement 34, die mit der Geflügelkarkasse in Kontakt kommen. Das Ablöseelement 20 ist als Einheit schwenkbar um eine Schwenkachse S_{GA} am Grundkörper 22 gelagert. Die Schwenkachse S_{GA} des Ablöseelementes 20 ist im Wesentlichen quer zur Transportrichtung T ausgerichtet. Die Schwenkachse S_{GA} des Ablöseelementes 20 liegt in Transportrichtung T hinter der Schwenksachse S_{AE} des Anlöseelementes 19. Quer zur Transportrichtung T ist der Abstand der Schwenkachse S_{GA} des Ablöseelementes 20 zum Stützkörper 16 geringer als der Abstand der Schwenksachse S_{AE} des Anlöseelementes 19 zum Stützkörper 16.

Die Greifzange 31 umfasst zwei Greifarme 35, 36. An jedem der beiden Greifarme 35, 36 ist am freien Ende jeweils eine Zangenbacke 32, 33 angeordnet. Das Abweiserelement 20 umfasst einen Abweiserarm 37 und einen Abweiserkopf 38. Der Abweiserkopf 38 ist gekröpft am Abweiserarm 37 angeordnet, derart, dass der Abweiserkopf 38 weiter in die Förderstrecke hineinragt als der Abweiserarm 37. Der Abweiserkopf 38 liegt quer zur Transportrichtung T in etwa auf der Höhe der Zangenbacken 32, 33. Die Zangenbacken 32, 33 der Greifzange 31 liegen in Transportrichtung T vor dem Abweiserkopf 38 des Abweiserelementes 34. Für den Fall, dass das Anlöseelement 19 und das Ablöseelement 20 durch ein Kombinationswerkzeug gebildet werden, übernimmt die Greifzange 31 auch die Funktionalität des Anlöseelementes 19, indem die Greifzange 31 an der Einlaufseite der Geflügelkarkasse eine scharfe Kante oder dergleichen aufweist, mittels der das Einschneiden realisierbar ist, bevor die Zangenbacken 32, 33 in ihre Klemmposition bewegt werden. In anderen Weiterbildungen kann die Greifzange 31 so "bissig" ausgebildet sein, dass das Einschneiden während des Klemmvorgangs ausgeführt wird.

Das Ablöseelement 20 steht federgespannt gegen einen einstellbaren (nicht explizit dargestellten) Anschlag in einer Ausgangsposition, derart, dass die mittels des Förderers 14 entlang der Förderstrecke in Transportrichtung T transportierten Geflügelkarkassen 12 mit ihrem Brustbein 30 zwangsläufig in Eingriff mit dem in der Ausgangsposition stehenden Ablöseelement 20 gelangen. Die Federspannung wird durch ein Federelement 39 erzeugt, das optional austauschbar ausgebildet ist. Das schwenkbar gelagerte und federgespannte Ablöseelement 20 ist produktgesteuert gegen die Federkraft auslenkbar ausgebildet. Sobald der Kontakt zwischen Geflügelkarkasse 12 und Ablöseelement 20 durch den Weitertransport der Geflügelkarkasse 12 in Transportrichtung T aufgehoben ist, bewegt sich das Ablöseelement 20 durch die Federkraft selbsttätig zurück in die Ausgangsposition. Die Federkraft des Ablöseelementes 20 ist einstellbar, z.B. durch Austausch des Federelementes oder auf andere Weise.

Bevorzugt ist das Abweiserelement 34 des Ablöseelementes 20 um die Schwenkachse S_{GA} schwenkbar am Grundkörper 22 gelagert, und das Paar Zangenbacken 32, 33 ist relativ zum Abweiserelement 34 schwenkbar um Schwenkachsen S_{ZB} am Abweiserelement 34 gelagert, wobei die Schwenkachsen S_{ZB} der Zangenbacken 32, 33 quer zur Schwenkachse S_{GA} des Abweiserelementes 34 ausgerichtet sind. Konkret ist im dargestellten Ausführungsbeispiel der Abweiserarm 37 schwenkbar am Grundkörper 22 gelagert. Am freien Ende des Abweiserarmes 37 ist der gekröpfte Abweiserkopf 38 angeordnet. Der Abweiserkopf 38 weist eine schräge Kontaktfläche 40 auf, auf die die Geflügelkarkasse 12 mit ihrem Brustbein 30 aufläuft. Die Greifzange 31 ist mit ihren Greifarmen 35, 36 schwenkbar am Abweiserarm 37 gelagert. Am freien Ende der Greifarme 35, 36 sind die gekröpften Zangenbacken 32, 33 angeordnet. Die Zangenbacken 32, 33 und der Abweiserkopf 38 bilden die Funktionsteile von Greifzange 31 und Abweiserelement 34.

Der Greifzange 31 ist ein pneumatischer Antrieb 41 zum pneumatischen Schließen und Öffnen der Zangenbacken 32, 33 zugeordnet, wobei die Schwenkbewegungen der Zangenbacken 32, 33 aufeinander zu und voneinander weg relativ zum Abweiserelement 34 bzw. zum Abweiserarm 37 ausführbar sind. Mittels des pneumatischen Antriebs 41 sind die Greifarme 35, 36 um die Schwenkachsen S_{ZB} schwenkbar. Die beiden Zangenbacken 32, 33 weisen auf ihren einander zugewandten Innenflächen eine Profilierung 42 auf, wobei die Profilierung 42 vorzugsweise aus einem Längsschliff der Innenflächen gebildet ist, derart, dass Profilriefen in der Ausgangsposition des Ablöseelementes 20 im Wesentlichen parallel zur Längsachse L_{SK} des Stützkörpers 16 bzw. im Wesentlichen parallel zur Transportrichtung T verlaufen.

In einer nicht dargestellten Ausführungsform ist weiterhin ein Klappenelement vorgesehen, das federbelastet ausgebildet und entlang der Förderstrecke derart angeordnet ist, dass es mit dem bereits teilweise vom Brustbeinkamm 11 abgezogenen Fleischstreifen 13 in Eingriff bringbar ist.

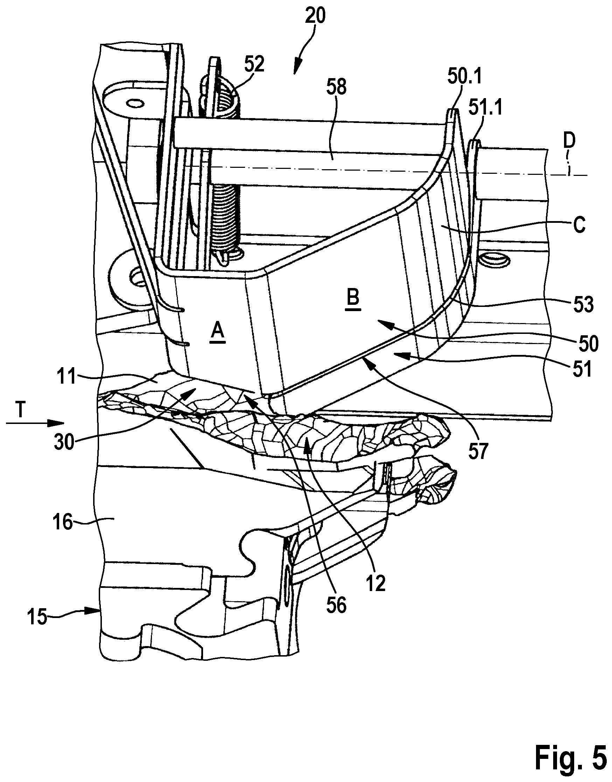

In einer zweiten Ausführungsform umfasst das Ablöseelement 20 zwei Klemmbacken 50, 51, wobei mindestens eine der Klemmbacken 51 relativ zur zweiten Klemmbacke 50 bewegbar ausgebildet ist. In der in Figur 5 dargestellten Ausführungsform ist eine erste Klemmbacke 50, nämlich eine untere Klemmbacke 50, ortsfest und stationär ausgebildet. Die ortsfeste Klemmbacke 50 kann Bestandteil eines Gehäuses, des Rahmens 23 oder dergleichen oder an diesem befestigt sein. Die zweite Klemmbacke 51, nämlich eine obere Klemmbacke 51, ist relativ zur ersten Klemmbacke 50 bewegbar ausgebildet. Die oder jede bewegbare Klemmbacke 51 ist mittels mindestens eines Federelementes 52 federgespannt in einer Aufnahmeposition zum Aufnehmen des Brustbeinkamms 11 zwischen den beiden Klemmbacken 50, 51 gehalten, wobei die bewegbare Klemmbacke 51 produktgesteuert gegen die Federkraft des Federelementes 52 relativ zur ortsfesten Klemmbacke 50 auslenkbar ausgebildet und eingerichtet ist. Das Federelement 52 ist zum einen an der bewegbaren Klemmbacke 51 und zum anderen am Rahmen 23 befestigt.

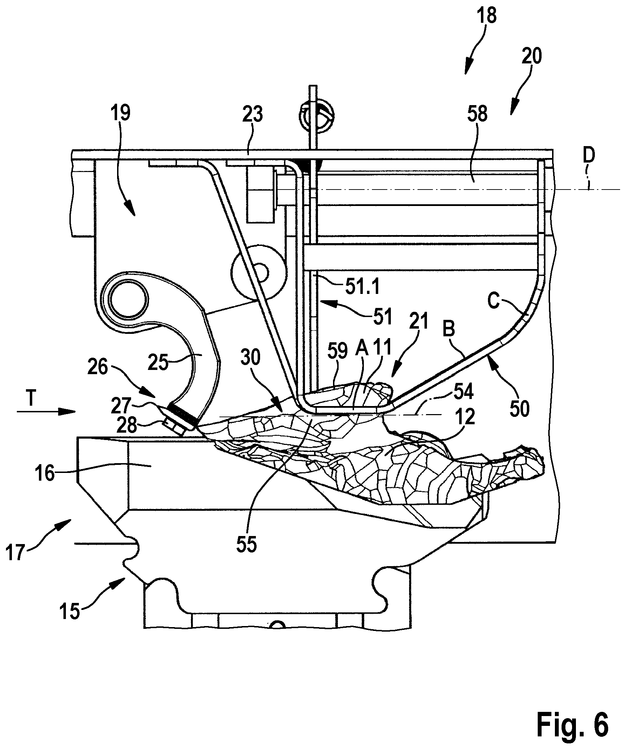

In der bevorzugten Ausführungsform sind die beiden Klemmbacken 50, 51 durch zwei separate Blechkörper gebildet, die zur Bildung eines Spaltes 53 zum Aufnehmen des Brustbeinkamms 11 mit ihren schmalen Kanten 50.1, 51.1 einander gegenüberliegend angeordnet sind, derart, dass ein parallel zur Transportrichtung T transportiertes Brustbein 30 der Geflügelkarkasse 12 an einem Brustbeinansatz 54 zwischen dem Brustbeinkamm 11 und einem Brustbeinsteg 55 in den Spalt 53 einführbar ist. Der Brustbeinansatz 54 ist insbesondere in der Figur 6 durch eine imaginäre Linie dargestellt, die sich parallel zur Transportrichtung T erstreckt. In der Figur 6 ist zu erkennen, dass die Haltevorrichtung 15 mit dem Stützkörper 16 beim Bewegen durch die Löseeinheit 18 sowohl im Bereich des Anlöseelementes 19 als auch im Bereich des Ablöseelementes 20 dieselbe Ausrichtung aufweist, derart, dass das Brustbein 30 mit dem Brustbeinkamm 11 in paralleler Ausrichtung zur Transportrichtung T zwischen die Klemmbacken 50, 51 geführt wird.

Die Klemmbacken 50, 51 bzw. die Blechkörper sind derart ausgebildet und eingerichtet, dass sie in der Aufnahmeposition entgegen der in Transportrichtung T einlaufenden Geflügelkörper bzw. der Teile davon aufweitend geformt sind. Die Klemmbacken 50, 51 bzw. die Blechkörper bilden einen in Transportrichtung T sich verjüngenden Einlauf- oder Zuführtrichter, der quasi in dem eigentlichen (Führungs-)Spalt 53 mündet. In einem Zuführbereich 56 der Klemmbacken 50, 51 bzw. der Blechkörper ist deren Abstand zueinander größer als in einem Klemmbereich 57, in dem der Abstand zueinander, der auch gleich Null sein kann, den Spalt 53 definiert.

Die bewegbare Klemmbacke 51 bzw. der bewegbare Blechkörper ist um eine Drehachse D aus einer Aufnahmeposition in eine Halteposition und zurück drehbar ausgebildet und eingerichtet. Der Blechkörper der bewegbaren Klemmbacke 51 ist als Klemmbügel geformt, dessen freie Enden auf bzw. an einer drehbaren Welle 58 befestigt sind. Die Welle 58 selbst ist am Gehäuse, Rahmen 23 oder dergleichen gelagert. Die Drehachse D der bewegbaren Klemmbacke 51 bzw. des bewegbaren Blechkörpers ist parallel zur Transportrichtung T der einlaufenden Geflügelkörper bzw. der Teile davon ausgerichtet.

Wie insbesondere der Figur 6 zu entnehmen ist, sind die Klemmbacken 50, 51 bzw. die Blechkörper in Transportrichtung T der einlaufenden Geflügelkörper bzw. der Teile davon mit einem ersten Abschnitt A im Wesentlichen parallel zur Transportrichtung T und parallel zum Brustbeinansatz 54 zwischen dem Brustbeinkamm 11 und dem Brustbeinsteg 55 ausgerichtet, während mindestens ein zweiter Abschnitt B in einem Winkel β zur Transportrichtung T und zum Brustbeinansatz 54 zwischen dem Brustbeinkamm 11 und dem Brustbeinsteg 55 mit β > 0 von einem durch in Transportrichtung T der Geflügelkörper oder der Teile davon definierten Transportpfad weglaufend ausgerichtet ist. Bevorzugt ist ein dritter Abschnitt C der Klemmbacken 50, 51 bzw. der Blechkörper in einem Winkel α zur Transportrichtung T und zum Brustbeinansatz 54 zwischen dem Brustbeinkamm 11 und dem Brustbeinsteg 55 mit α > β vom Transportpfad weglaufend ausgerichtet ist, wobei die ersten und zweiten und dritten Abschnitte A, B, C einer Klemmbacke 50, 51 bzw. eines Blechkörpers jeweils in Transportrichtung T hintereinander angeordnet und einstückig miteinander verbunden sind. Die beiden das Ablöseelement 20 bildenden Klemmbacken 50, 51 bzw. Blechkörper sind in Transportrichtung T gleichgerichtet verlaufend ausgebildet.

Die Vorrichtung 10 kann als Einzeleinheit ausschließlich zum Gewinnen des Fleischstreifens 13 vom Brustbeinkamm 11 ausgebildet und eingerichtet sein. Vorzugsweise ist die Löseeinheit 18 nur eine von diversen Bearbeitungsstationen der Vorrichtung 10. Beispielsweise können für die Vorrichtung 10 als weitere Bearbeitungsstationen eine (nicht explizit dargestellte) Ritzeeinheit zum Einritzen der Haut, eine Enthäuteeinheit 43 zum Entfernen der Haut, eine Sehnentrenneinheit 44, eine Einheit 45 zum Trennen der Gabelbeine, mindestens eine Filetiereinheit 46 zum Lösen und Trennen der Brustfilets von der Geflügelkarkasse 12, eine Einheit 47 zum Gewinnen des seitlich am Brustbein 30 befindlichen Restfleisches sowie eine Einheit 48 zum Gewinnen von Teilen des Brustbeins 30, die auch die knorpeligen Bereiche des Brustbeins oder Teile davon umfassen, vorgesehen sein. Dadurch ist letztlich eine Filetiermaschine 49 gebildet, die zusätzlich weitere Bearbeitungsstationen umfassen kann.

Die Vorrichtung 10 und auch die Filetiermaschine 49 umfasst eine nicht explizit dargestellte Steuereinheit, die zum Steuern des Förderers 14 einschließlich der den Stützkörper 16 umfassenden Haltevorrichtung 15 sowie der oder jeder Bearbeitungsstation 17 ausgebildet und eingerichtet ist. Mittels der Steuerung sind die angetriebenen Funktionsteile der Vorrichtung 10 aufeinander abgestimmt zu steuern.

Im Folgenden wird das erfindungsgemäße Verfahren anhand der Zeichnung näher beschrieben:
Das Verfahren dient zum Ablösen von sich an einem Brustbeinkamm 11 einer Geflügelkarkasse 12 befindlichen Fleischstreifen 13 von bereits von Brustfilets befreiten Geflügelkarkassen 12 geschlachteter Geflügelkörper oder Teilen davon. Für das Ablösen wird jede Geflügelkarkasse 12 entlang einer Förderstrecke in Transportrichtung T in den Bereich einer Löseeinheit 18 zum Ablösen des Fleischstreifens 13 geführt, wobei die Geflügelkarkasse 12 beim Transport in Transportrichtung T auf einem Stützkörper 16 einer Haltevorrichtung 15 zum Halten der Geflügelkarkassen 12 beim Transport und während der Bearbeitung gehalten wird. Beim Transport der Geflügelkarkasse 12 in den Arbeits- und Wirkbereich der Löseeinheit 18 ist die Längsachse L_{SK} des Stützkörpers 16 parallel zur Transportrichtung T ausgerichtet. Bei einer derart ausgerichteten Geflügelkarkasse 12, die mit ihrem Brustbeinkamm 11 in Längsrichtung durch die Löseeinheit 18 transportiert wird, wird der Fleischstreifen 13 beim Transport entlang der bzw. durch die Löseeinheit 18 abgelöst.

Erfindungsgemäß wird der Fleischstreifen 13 mittels der Löseeinheit 18 in zwei separaten und nacheinander ausgeführten Schritten vom Brustbeinkamm 11 der Geflügelkarkasse 12 abgelöst. In einem ersten Anlöseschritt wird der Fleischstreifen 13 im Bereich eines in Transportrichtung T vorauslaufenden Brustbeinhorns 21 des Brustbeins 30 angelöst, indem die zwischen dem Fleisch und dem Brustbein 30 befindliche Membran am Brustbeinhorn 21 eingeschnitten wird, während in einem zweiten Ablöseschritt das eingeschnittene freie Ende des Fleischstreifens 13 gegriffen und in Längsrichtung des Brustbeinkamms 11 von diesem abgezogen wird. Das Anlösen und das Ablösen kann mit einem Kombinationswerkzeug oder mit separaten Werkzeugen ausgeführt werden.

Für den Anlöseschritt wird der Einschnitt in den Fleischstreifen 13 im Bereich des Brustbeinhorns 21 zum Anlösen des Fleischstreifens 13 durch eine Klinge 27 in einem spitzen Winkel β, der zwischen einer Längsachse L_{SK} eines die Geflügelkarkasse 12 tragenden Stützkörpers 16 und einer Längsachse L_{K} der den Einschnitt ausführenden Klinge 27 gebildet ist, ausgeführt. Mit anderen Worten läuft die Geflügelkarkasse 12 mit ihrem Brustbeinhorn 21 gegen die Klinge 27, wodurch die Spitze des Brustbeins 30 bzw. des sich auf dem Brustbeinkamm 11 befindlichen Fleischstreifens 13 im Bereich des Brustbeinhorns 21 eingeschnitten wird.

Dazu wird die Klinge 27 in ihrer Ausgangsposition durch den Transport der Geflügelkarkasse 12 in Transportrichtung T mit dem Brustbeinhorn 21 in Eingriff gebracht. Anschließend wird die Klinge 27 dann produktgesteuert geführt, wobei der Druck der Klinge 27 auf das Brustbeinhorn 21 durch den weiteren Transport in Transportrichtung T zunimmt. Sobald sich die Klinge 27 durch den weiteren Transport in Transportrichtung T außer Eingriff mit der Geflügelkarkasse 12 befindet, wird die Klinge 27 in ihre Ausgangsposition zurückbewegt. Zunächst wird die Klinge 27 über einen Schwenkhebel 25 durch das Brustbein 30 der Geflügelkarkasse 12 gegen eine Federspannung ausgelenkt. Die Federspannung sorgt dafür, dass der Schwenkhebel 25 mit der Klinge 27 anschließend wieder in seine Ausgangsposition gegen einen Anschlag zurückbewegt wird. Das Anlösen des Fleischstreifens 13 erfolgt ausschließlich produktgesteuert, so dass es größenunabhängig sowohl für große als auch für kleine Geflügelkarkassen 12 funktioniert.

Für den Ablöseschritt zum Ablösen des bereits angelösten Fleischstreifens 13 wird das freie Ende desselben zwischen zwei Zangenbacken 32, 33 einer Greifzange 31 geklemmt, und der geklemmte Fleischstreifen 13 wird durch ein produktgesteuertes Abweiserelement 34 in Längsrichtung mindestens teilweise vom Brustbeinkamm 11 gezogen. Dazu wird die Geflügelkarkasse 12 weiter in Transportrichtung T transportiert. Entlang des Förderweges bzw. der Förderstrecke warten die Zangenbacken 32, 33 der Greifzange 31 in einer geöffneten Warteposition, bis die Spitze des Brustbeins 30 in Form des Brustbeinhorns 21 mit dem angelösten Fleischstreifen 13 in die geöffnete Greifzange 31 einläuft, um die Zangenbacken 32, 33 dann in ihre Klemmposition zum Klemmen des freien Endes des Fleischstreifens 13 zu bewegen. Das erfolgt vorzugsweise pneumatisch. Die Zangenbacken 32, 33 der Greifzange 31 werden mittels eines pneumatischen Antriebs 41 geschlossen und geöffnet. Das gesteuerte Schließen und Öffnen der Greifzange 31 erfolgt in Abhängigkeit der Position der Haltevorrichtung 15. Hat die Haltevorrichtung 15 eine bestimmte Position erreicht, werden die Zangenbacken 32, 33 geschlossen. Später werden die Zangenbacken 32, 33 an einer weiteren bestimmen Position wieder geöffnet, um den abgelösten Fleischstreifen 13 freizugeben.

In der Klemmposition der Greifzange 31 wird diese produktgesteuert über das Abweiserelement 34 vom Brustbein 30 wegbewegt. Es erfolgt also zum einen eine Relativbewegung durch den Transport der Geflügelkarkasse 12 durch die Löseeinheit 18, da die Greifzange 31 in Transportrichtung T ortsfest ist. Zum anderen erfolgt eine - vorzugsweise überlagerte - Relativbewegung durch die Schwenkbewegung der Greifzange 31 über das Abweiserelement 34.

Während also die Greifzange 31 bzw. die beiden Zangenbacken 32, 33 in Abhängigkeit der Position des die Geflügelkarkasse 12 tragenden Stützkörpers 16 entlang der Förderstrecke aktiv zu und auf gesteuert werden, um den Fleischstreifen 13 zu klemmen und zu lösen, erfolgt die Bewegung zum Ablösen des Fleischstreifens 13 produktgesteuert. Die geschlossene und den Fleischstreifen 13 klemmende Greifzange 31 wird nämlich während des Transports in Transportrichtung T produktgesteuert vom Brustbein wegbewegt, indem das federgespannte Abweiserelement 34 durch das Brustbein 30 ausgelenkt wird, sobald das Brustbein 30 das Abweiserelement 34 erreicht, bis der Fleischstreifen 13 mindestens teilweise vom Brustbeinkamm 11 abgelöst bzw. abgezogen ist. Nach dem mindestens teilweisen Ablösen des Fleischstreifens 13 werden die Zangenbacken 32, 33 aktiv geöffnet und das aus Greifzange 31 und Abweiserelement 34 gebildete Ablöseelement 20 wird federgespannt in seine Warteposition mit geöffneten Zangenbacken 32, 33 bewegt.

Für den Fall, dass der Fleischstreifen 13 während eines Verarbeitungszyklus nicht vollständig durch die beiden genannten Relativbewegungen abgelöst werden kann, bevor eine nachfolgende Haltevorrichtung 15 in den Arbeits- und Wirkbereich der Löseeinheit 18 einläuft, kann das vollständige Ablösen des Fleischstreifens 13 bei noch geklemmtem Fleischstreifen 13 unterstützt und beschleunigt werden. Eine einfache Möglichkeit besteht zum Beispiel darin, entlang der Förderstrecke ein Hindernis vorzusehen. Das Hindernis kann zum Beispiel eine einfache federgespannte Klappe sein, gegen die der noch geklemmte Fleischstreifen 13 transportiert wird. Eine andere Möglichkeit sieht vor, dass der Stützkörper 16 mit noch in der Greifzange 31 geklemmtem Fleischstreifen 13 aus einer Ausrichtung, in der dieser zum Anlösen und Abziehen des Fleischstreifens 13 mit seiner Längsachse L_{SK} parallel zur Transportrichtung T der Haltevorrichtungen 15 ausgerichtet ist, um eine Drehachse D_{SK}, die quer zur Transportrichtung T ausgerichtet ist, gedreht wird, um den angelösten und mindestens teilweise abgelösten Fleischstreifen 13 vollständig von der Geflügelkarkasse 12 zu reißen.

Alternativ kann für den Ablöseschritt zum Ablösen des bereits angelösten Fleischstreifens 13 die Geflügelkarkasse 12 mit dem Brustbeinkamm 11 zwischen zwei Klemmbacken 50, 51 eingeführt werden. Beim Transportieren der Geflügelkarkasse 12 in Transportrichtung T bleibt die Orientierung der Haltevorrichtung 15 und des Stützkörpers gleich, so dass die Geflügelkarkasse 12 bzw. dessen Brustbeinkamm 11 in paralleler Ausrichtung zur Transportrichtung T bewegt wird. Dabei läuft der Brustbeinkamm 11 zwischen die beiden Klemmbacken 50, 51 ein. Genauer wird die Geflügelkarkasse 12 mit dem Bereich eines Brustbeinansatzes 54 zwischen dem Brustbeinkamm 11 und einem Brustbeinsteg 55 parallel zur Transportrichtung T in einen zwischen zwei Blechkörpern als Klemmbacken 50, 51 gebildeten Spalt 53 eingeführt, so dass sich die Blechkörper zwischen dem angelösten Fleischstreifen 13 und dem Brustbeinsteg 55 befinden. Mit anderen Worten liegt der Brustbeinsteg 55 auf der einen Seite der Klemmbacken 50, 51, während sich der Brustbeinkamm 11 mit dem angelösten Fleischstreifen 13 auf der anderen Seite der Klemmbacken 50, 51 befindet. Der angelöste Fleischstreifen 13 wird beim Transport der Geflügelkarkasse 12 in Transportrichtung T von den Blechkörpern zunächst in Richtung einer freien Kante 59 des Brustbeinkamms 11 bewegt und letztlich in Transportrichtung T aufgehalten, so dass der Fleischstreifen 13 beim Weitertransport der Geflügelkarkasse 12 in Transportrichtung T aus der Löseeinheit 18 heraus festgehalten und vollständig vom Brustbeinkamm 11 abgerissen wird. Mindestens ein Blechkörper wird produktgesteuert vom zweiten Blechkörper wegbewegt, so dass die Blechkörper einen Spalt 53 zwischen sich bilden und zu beiden Seiten des Brustbeinkamms 11 am Brustbeinansatz 54 anliegen, wobei sich der Spalt 53 zwischen den beiden Blechkörpern schließt und den Fleischstreifen 13 hält, sobald der Brustbeinkamm 11 die Löseeinheit 18 verlässt. Zunächst liegen die Blechkörper in der Aufnahmeposition mit ihren schmalen Kanten 50.1, 51.1 aneinander, zumindest im Klemmbereich 57. Im Zuführbereich 56 ist der Abstand der freien Kanten 50.1, 51.1 größer, um das "Einfädeln" des Brustbeinkamms 11 zwischen die Blechkörper zu erleichtern. Erreicht der Brustbeinkamm 11 den Klemmbereich 57, hebt der Brustbeinkamm 11 die bewegbare Klemmbacke 51, also den oberen Blechkörper, an, so dass sich der Spalt 53 zwischen den Blechkörpern öffnet. Auf der einen Seite der das Ablöseelement 20 bildenden Klemmbacken 50, 51 wird die Geflügelkarkasse 12 mit dem Brustbeinsteg 55 entlanggeführt, während der Brustbeinkamm 11 mit dem angelösten Fleischstreifen 13 auf der anderen Seite der das Ablöseelement 20 bildenden Klemmbacken 50, 51 entlanggeführt wird. Beim Weitertransport kann der Brustbeinkamm 11 durch den Spalt 53 das Ablöseelement 20 verlassen, während der Fleischstreifen 13 vom Ablöseelement 20 festgehalten und am Weitertransport gehindert wird, so dass es zwangsläufig zum Abriss kommt. Die von den Blechkörpern gehaltenen und vollständig vom Brustbein gelösten Fleischstreifen 13 werden dann jeweils von nachfolgend gelösten Fleischstreifen 13 aus der Halterung gedrückt und abtransportiert.

Die vollständig abgelösten Fleischstreifen 13 werden aus der Vorrichtung 10 abgeführt und weiterverarbeitet. Beispielsweise können die gelösten Fleischstreifen 13 auf eine Rutsche oder dergleichen fallen, mittels der diese dann einem Transportbehälter zugeführt werden.

Besonders bevorzugt wird das Verfahren mit einer Vorrichtung 10 nach einem oder mehreren der Ansprüche 1 bis 32 ausgeführt.

## Patentansprüche

1. Vorrichtung (10), ausgebildet und eingerichtet zum Ablösen von sich an einem Brustbeinkamm (11) einer Geflügelkarkasse (12) befindlichen Fleischstreifen (13) von bereits von Brustfilets befreiten Geflügelkarkassen (12) geschlachteter Geflügelkörper oder Teilen davon, umfassend einen umlaufenden Förderer (14) mit mindestens einer Haltevorrichtung (15) mit einem Stützkörper (16) zum Aufnehmen und Halten der Geflügelkörper bzw. der Teile davon während des Transports in Transportrichtung T durch die Vorrichtung (10), sowie mindestens eine Bearbeitungsstation (17) entlang einer Förderstrecke des Förderers (14), wobei eine der Bearbeitungsstationen (17) als Löseeinheit (18) zum Ablösen des Fleischstreifens (13) vom Brustbeinkamm (11) ausgebildet ist, **dadurch gekennzeichnet, dass** die Löseeinheit (18) ein Anlöseelement (19) und ein Ablöseelement (20) umfasst, wobei das Anlöseelement (19) zum Einschneiden des Fleischstreifens (13) im Bereich eines in Transportrichtung T vorauslaufenden Brustbeinhorns (21) des Brustbeinkamms (11) und das Ablöseelement (20) zum Greifen und Abziehen des Fleischstreifens (13) vom Brustbeinkamm (11) ausgebildet und eingerichtet ist.

2. Vorrichtung (10) nach Anspruch 1, **dadurch gekennzeichnet, dass** das Anlöseelement (19) und das Ablöseelement (20) separate Werkzeuge sind, die zur Ausführung separater und nacheinander ausführbarer Arbeitsschritte ausgebildet und eingerichtet und in Transportrichtung T hintereinander angeordnet sind.

3. Vorrichtung (10) nach Anspruch 1 oder 2, **dadurch gekennzeichnet, dass** das Anlöseelement (19) und das Ablöseelement (20) an einem vorzugsweise gemeinsamen Grundkörper (22) angeordnet sind, wobei das Ablöseelement (20) in Transportrichtung T hinter dem Anlöseelement (19) angeordnet ist.

4. Vorrichtung (10) nach einem oder mehreren der Ansprüche 1 bis 3, **dadurch gekennzeichnet, dass** der Stützkörper (16) vorzugsweise um eine Drehachse D_{SK}, die im Wesentlichen quer zur Transportrichtung T ausgerichtet ist, drehbar ausgebildet ist und im Bereich der Löseeinheit (18) eine Position aufweist, in der die Längsachse L_{SK} des Stützkörpers (16) parallel zur Transportrichtung T ausgerichtet ist.

5. Vorrichtung (10) nach Anspruch 3 oder 4, **dadurch gekennzeichnet, dass** das Anlöseelement (19) einen Schwenkhebel (25) umfasst, an dessen freiem Ende (26) eine Klinge (27) angeordnet ist, wobei der Schwenkhebel (25) schwenkbar um eine Schwenkachse S_{AE} am Grundkörper (22) gelagert ist.

6. Vorrichtung (10) nach Anspruch 5, **dadurch gekennzeichnet, dass** die Klinge (27) lösbar am Schwenkhebel (25) befestigt ist.

7. Vorrichtung (10) nach Anspruch 5 oder 6, **dadurch gekennzeichnet, dass** der Schwenkhebel (25) federgespannt gegen einen einstellbaren Anschlag in einer Ausgangsposition steht, derart, dass die mittels des Förderers (14) entlang der Förderstrecke in Transportrichtung T transportierten Geflügelkarkassen (12) mit dem Brustbein (30) zwangsläufig in Eingriff mit dem in der Ausgangsposition stehenden Schwenkhebel (25) und dessen daran angeordneter Klinge (27) gelangen.

8. Vorrichtung (10) nach einem oder mehreren der Ansprüche 5 bis 7, **dadurch gekennzeichnet, dass** die Klinge (27) am freien Ende des Schwenkhebels (25) in dessen Ausgangsposition in einem Winkel β zur zu verarbeitenden Geflügelkarkasse (12) ausgerichtet ist, derart, dass die Spitze der Klinge (27) auf das Brustbeinhorn (21) gerichtet ist.

9. Vorrichtung (10) nach Anspruch 8, **dadurch gekennzeichnet, dass** der zwischen der Längsachse L_{SK} des Stützkörpers (16) und der Längsachse L_{K} der Klinge (27) eingeschlossene Winkel β größer 0° und kleiner 90° ist und bevorzugt zwischen 20° und 60° und besonders bevorzugt etwa 45° beträgt.

10. Vorrichtung (10) nach einem oder mehreren der Ansprüche 7 bis 9, **dadurch gekennzeichnet, dass** der schwenkbar gelagerte und federgespannte Schwenkhebel (25) produktgesteuert gegen die Federkraft auslenkbar ausgebildet ist.

11. Vorrichtung (10) nach einem oder mehreren der Ansprüche 1 bis 10, **dadurch gekennzeichnet, dass** das Ablöseelement (20) eine Greifzange (31) mit einem Paar Zangenbacken (32, 33) sowie ein Abweiserelement (34) umfasst, wobei die Greifzange (31) in Transportrichtung T vor dem Abweiserelement (34) angeordnet ist.

12. Vorrichtung (10) nach einem oder mehreren der Ansprüche 3 bis 11, **dadurch gekennzeichnet, dass** das Ablöseelement (20) schwenkbar um eine Schwenkachse S_{GA} am Grundkörper (22) gelagert ist.

13. Vorrichtung (10) nach einem oder mehreren der Ansprüche 1 bis 12, **dadurch gekennzeichnet, dass** das Ablöseelement (20) federgespannt gegen einen einstellbaren Anschlag in einer Ausgangsposition steht, derart, dass die mittels des Förderers (14) entlang der Förderstrecke in Transportrichtung T transportierten Geflügelkarkassen (12) mit ihrem Brustbein (30) zwangsläufig in Eingriff mit dem in der Ausgangsposition stehenden Ablöseelement (20) gelangen.

14. Vorrichtung (10) nach Anspruch 13, **dadurch gekennzeichnet, dass** das schwenkbar gelagerte und federgespannte Ablöseelement (20) produktgesteuert gegen die Federkraft auslenkbar ausgebildet ist.

15. Vorrichtung (10) nach einem oder mehreren der Ansprüche 12 bis 14, **dadurch gekennzeichnet, dass** das Abweiserelement (34) um die Schwenkachse S_{GA} schwenkbar am Grundkörper (22) gelagert ist, und das Paar Zangenbacken (32, 33) relativ zum Abweiserelement (34) schwenkbar um Schwenkachsen S_{ZB} am Abweiserelement (34) gelagert ist, wobei die Schwenkachsen S_{ZB} der Zangenbacken (32, 33) im Wesentlichen quer zur Schwenkachse S_{GA} des Abweiserelementes (34) ausgerichtet sind.

16. Vorrichtung (10) nach einem oder mehreren der Ansprüche 11 bis 15, **dadurch gekennzeichnet, dass** der Greifzange (31) ein pneumatischer Antrieb (41) zum pneumatischen Schließen und Öffnen der Zangenbacken (32, 33) zugeordnet ist, wobei die Schwenkbewegungen der Zangenbacken (32, 33) aufeinander zu und voneinander weg relativ zum Abweiserelement (34) ausführbar sind.

17. Vorrichtung (10) nach einem oder mehreren der Ansprüche 11 bis 16, **dadurch gekennzeichnet, dass** die beiden Zangenbacken (32, 33) auf ihren einander zugewandten Innenflächen eine Profilierung (42) aufweisen, wobei die Profilierung (42) vorzugsweise aus einem Längsschliff der Innenflächen gebildet ist, derart, dass Profilriefen in der Ausgangsposition des Ablöseelementes (20) im Wesentlichen parallel zur Längsachse L_{SK} des Stützkörpers (16) bzw. im Wesentlichen parallel zur Transportrichtung T verlaufen.

18. Vorrichtung (10) nach einem oder mehreren der Ansprüche 1 bis 17, **dadurch gekennzeichnet, dass** weiterhin ein Klappenelement vorgesehen ist, das federbelastet ausgebildet und entlang der Förderstrecke derart angeordnet ist, dass es mit dem bereits teilweise vom Brustbeinkamm (11) abgezogenen Fleischstreifen (13) in Eingriff bringbar ist.

19. Vorrichtung (10) nach einem oder mehreren der Ansprüche 12 bis 18, **dadurch gekennzeichnet, dass** die Schwenkachsen S_{AE} des Anlöseelementes (19) und S_{GA} des Ablöseelementes (20) quer zur Transportrichtung T ausgerichtet sind.

20. Vorrichtung (10) nach einem oder mehreren der Ansprüche 1 bis 10, **dadurch gekennzeichnet, dass** das Ablöseelement (20) zwei Klemmbacken (50, 51) umfasst, wobei mindestens eine der Klemmbacken (50, 51) relativ zur zweiten Klemmbacke (51, 50) bewegbar ausgebildet ist.

21. Vorrichtung (10) nach Anspruch 20, **dadurch gekennzeichnet, dass** eine erste Klemmbacke (50) ortsfest und stationär ausgebildet ist, und die zweite Klemmbacke (51) relativ zur ersten Klemmbacke (50) bewegbar ausgebildet ist.

22. Vorrichtung (10) nach Anspruch 20 oder 21, **dadurch gekennzeichnet, dass** die oder jede bewegbare Klemmbacke (51) mittels mindestens eines Federelementes (52) federgespannt in einer Aufnahmeposition zum Aufnehmen des Brustbeinkamms (11) zwischen den beiden Klemmbacken (50, 51) gehalten ist, wobei die bewegbare Klemmbacke (51) produktgesteuert gegen die Federkraft des Federelementes (52) relativ zur ortsfesten Klemmbacke (50) auslenkbar ausgebildet und eingerichtet ist.

23. Vorrichtung (10) nach einem oder mehreren der Ansprüche 20 bis 22, **dadurch gekennzeichnet, dass** die beiden Klemmbacken (50, 51) durch zwei separate Blechkörper gebildet sind, die zur Bildung eines Spaltes (53) zum Aufnehmen des Brustbeinkamms (11) mit ihren schmalen Kanten (50.1, 51.1) einander gegenüberliegend angeordnet sind, derart, dass ein parallel zur Transportrichtung T transportiertes Brustbein (30) der Geflügelkarkasse (12) an einem Brustbeinansatz (54) zwischen dem Brustbeinkamm (11) und einem Brustbeinsteg (55) in den Spalt (53) einführbar ist.

24. Vorrichtung (10) nach Anspruch 22 oder 23, **dadurch gekennzeichnet, dass** die Klemmbacken (50, 51) bzw. die Blechkörper derart ausgebildet und eingerichtet sind, dass sie in der Aufnahmeposition entgegen der in Transportrichtung T einlaufenden Geflügelkörper bzw. der Teile davon aufweitend geformt sind.

25. Vorrichtung (10) nach einem oder mehreren der Ansprüche 20 bis 24, **dadurch gekennzeichnet, dass** die bewegbare Klemmbacke (51) bzw. der bewegbare Blechkörper um eine Drehachse D aus einer Aufnahmeposition in eine Halteposition und zurück drehbar ausgebildet und eingerichtet ist.

26. Vorrichtung (10) nach Anspruch 25, **dadurch gekennzeichnet, dass** die Drehachse D der bewegbaren Klemmbacke (51) bzw. des bewegbaren Blechkörpers parallel zur Transportrichtung T der einlaufenden Geflügelkörper bzw. der Teile davon ausgerichtet ist.

27. Vorrichtung (10) nach einem oder mehreren der Ansprüche 23 bis 26, **dadurch gekennzeichnet, dass** die Klemmbacken (50, 51) bzw. die Blechkörper in Transportrichtung T der einlaufenden Geflügelkörper bzw. der Teile davon mit einem ersten Abschnitt (A) im Wesentlichen parallel zur Transportrichtung T und parallel zum Brustbeinansatz (54) zwischen dem Brustbeinkamm (11) und dem Brustbeinsteg (55) ausgerichtet sind, während mindestens ein zweiter Abschnitt (B) in einem Winkel β zur Transportrichtung T und zum Brustbeinansatz (54) zwischen dem Brustbeinkamm (11) und dem Brustbeinsteg (55) mit β > 0 von einem durch in Transportrichtung T der Geflügelkörper oder der Teile davon definierten Transportpfad weglaufend ausgerichtet ist.

28. Vorrichtung (10) nach Anspruch 27, **dadurch gekennzeichnet, dass** ein dritter Abschnitt (C) der Klemmbacken (50, 51) bzw. der Blechkörper in einem Winkel α zur Transportrichtung T und zum Brustbeinansatz (54) zwischen dem Brustbeinkamm (11) und dem Brustbeinsteg (55) mit α > β vom Transportpfad weglaufend ausgerichtet ist, wobei die ersten und zweiten und dritten Abschnitte (A, B, C) einer Klemmbacke (50, 51) bzw. eines Blechkörpers jeweils in Transportrichtung T hintereinander angeordnet und einstückig miteinander verbunden sind.

29. Vorrichtung (10) nach einem oder mehreren der Ansprüche 20 bis 28, **dadurch gekennzeichnet, dass** die beiden das Ablöseelement (20) bildenden Klemmbacken (50, 51) bzw. Blechkörper in Transportrichtung T gleichgerichtet verlaufend ausgebildet sind.

30. Vorrichtung (10) nach einem oder mehreren der Ansprüche 13 bis 29, **dadurch gekennzeichnet, dass** die Federkraft des Anlöseelementes (19) und/oder die Federkraft des Ablöseelementes (20) einstellbar ausgebildet ist.

31. Vorrichtung (10) nach einem oder mehreren der Ansprüche 1 bis 30, **dadurch gekennzeichnet, dass** in Transportrichtung T vor der Löseeinheit (18) zum Ablösen des Fleischstreifens (13) vom Brustbeinkamm (11) weitere Bearbeitungsstationen (17) als Ritzeeinheit zum Einritzen der Haut, als Enthäuteeinheit (43) zum Entfernen der Haut, als Sehnentrenneinheit (44), als Einheit (45) zum Trennen der Gabelbeine, als Filetiereinheit (46) zum Lösen und Trennen der Brustfilets von der Geflügelkarkasse (12) sowie als Einheit (47) zum Gewinnen des seitlich am Brustbein (30) befindlichen Restfleisches ausgebildet sein können bzw. sind und in Transportrichtung T hinter der Löseeinheit (18) zum Ablösen des Fleischstreifens (13) vom Brustbeinkamm (11) weitere Bearbeitungsstationen (17) als Einheit (48) zum Gewinnen von Teilen des Brustbeins (30), die auch die knorpeligen Bereiche des Brustbeins oder Teile davon umfassen, ausgebildet sein können bzw. sind.

32. Vorrichtung (10) nach einem oder mehreren der Ansprüche 1 bis 31, **dadurch gekennzeichnet, dass** sie eine Steuereinheit umfasst, die zum Steuern des Förderers (14) einschließlich der den Stützkörper (16) umfassenden Haltevorrichtung (15) sowie der oder jeder Bearbeitungsstation (17) ausgebildet und eingerichtet ist.

33. Verfahren zum Ablösen von sich an einem Brustbeinkamm (11) einer Geflügelkarkasse (12) befindlichen Fleischstreifen (13) von bereits von Brustfilets befreiten Geflügelkarkassen (12) geschlachteter Geflügelkörper oder Teilen davon, umfassend die Schritte:
- Zuführen der Geflügelkarkasse (12) entlang einer Förderstrecke in Transportrichtung T in den Bereich einer Löseeinheit (18) zum Ablösen des Fleischstreifens (13), wobei die Geflügelkarkasse (12) beim Transport in Transportrichtung T auf einem Stützkörper (16) einer Haltevorrichtung (15) zum Halten der Geflügelkarkassen (12) beim Transport und während der Bearbeitung gehalten wird, wobei die Längsachse L_{SK} des Stützkörpers (16) parallel zur Transportrichtung T ausgerichtet ist, und
- Ablösen des Fleischstreifens (13) beim Transport entlang der bzw. durch die Löseeinheit,
**dadurch gekennzeichnet, dass** der Fleischstreifen (13) mittels der Löseeinheit (18) in zwei separaten und nacheinander ausgeführten Schritten vom Brustbeinkamm (11) der Geflügelkarkasse (12) abgelöst wird.

34. Verfahren nach Anspruch 33, **dadurch gekennzeichnet, dass** in einem ersten Anlöseschritt der Fleischstreifen (13) im Bereich eines in Transportrichtung T vorauslaufenden Brustbeinhorns (21) des Brustbeins (30) angelöst wird, indem die zwischen dem Fleisch und dem Brustbein (30) befindliche Membran am Brustbeinhorn (21) eingeschnitten wird, während in einem zweiten Ablöseschritt das eingeschnittene freie Ende des Fleischstreifens (13) gegriffen und in Längsrichtung des Brustbeinkamms (11) von diesem abgezogen wird.

35. Verfahren nach Anspruch 34, **dadurch gekennzeichnet, dass** für den Anlöseschritt der Einschnitt in den Fleischstreifen (13) im Bereich des Brustbeinhorns (21) zum Anlösen des Fleischstreifens (13) durch eine Klinge (27) in einem spitzen Winkel β, der zwischen einer Längsachse L_{SK} eines die Geflügelkarkasse (12) tragenden Stützkörpers (16) und einer Längsachse L_{K} einer den Einschnitt ausführenden Klinge (27) gebildet ist, ausgeführt wird.

36. Verfahren nach Anspruch 35, **dadurch gekennzeichnet, dass** die Klinge (27) in ihrer Ausgangsposition durch den Transport der Geflügelkarkasse (12) in Transportrichtung T mit dem Brustbeinhorn (21) in Eingriff gebracht wird, die Klinge (27) dann produktgesteuert geführt wird, wobei der Druck der Klinge (27) auf das Brustbeinhorn (21) durch den weiteren Transport in Transportrichtung T zunimmt, und die Klinge (27) in ihre Ausgangsposition zurückbewegt wird, sobald sich die Klinge (27) durch den weiteren Transport in Transportrichtung T außer Eingriff mit der Geflügelkarkasse (12) befindet.

37. Verfahren nach Anspruch 35 oder 36, **dadurch gekennzeichnet, dass** die Klinge (27) über einen Schwenkhebel (25) durch das Brustbein (30) der Geflügelkarkasse (12) gegen eine Federspannung ausgelenkt wird, um außer Eingriff durch die Federspannung in ihre Ausgangsposition gegen einen Anschlag zurückbewegt zu werden.

38. Verfahren nach einem oder mehreren der Ansprüche 34 bis 37, **dadurch gekennzeichnet, dass** für den Ablöseschritt zum Ablösen des bereits angelösten Fleischstreifens (13) das freie Ende desselben zwischen zwei Zangenbacken (32, 33) einer Greifzange (31) geklemmt wird, und der geklemmte Fleischstreifen (13) durch ein produktgesteuertes Abweiserelement (34) in Längsrichtung mindestens teilweise vom Brustbeinkamm (21) gezogen wird.

39. Verfahren nach Anspruch 38, **dadurch gekennzeichnet, dass** die Zangenbacken (32, 33) der Greifzange (31) mittels eines pneumatischen Antriebs geschlossen und geöffnet werden, wobei die Greifzange (31) in ihrer Klemmposition produktgesteuert über das Abweiserelement (34) vom Brustbein (30) wegbewegt wird.

40. Verfahren nach Anspruch 38 oder 39, **dadurch gekennzeichnet, dass** die Greifzange (31) bzw. die beiden Zangenbacken (32, 33) in Abhängigkeit der Position des die Geflügelkarkasse (12) tragenden Stützkörpers (16) entlang der Förderstrecke aktiv zu und auf gesteuert werden.

41. Verfahren nach einem oder mehreren der Ansprüche 38 bis 40, **dadurch gekennzeichnet, dass** die Zangenbacken (32, 33) der Greifzange (31) in einer geöffneten Warteposition entlang der Förderstrecke warten, bis die Spitze des Brustbeins (30) in Form des Brustbeinhorns (21) mit dem angelösten Fleischstreifen (13) in die geöffnete Greifzange (31) einläuft, um die Zangenbacken (32, 33) dann pneumatisch gesteuert in ihre Klemmposition zum Klemmen des freien Endes des Fleischstreifens (13) zu bewegen.

42. Verfahren nach einem oder mehreren der Ansprüche 38 bis 41, **dadurch gekennzeichnet, dass** die geschlossene und den Fleischstreifen (13) klemmende Greifzange (31) während des Transports in Transportrichtung T produktgesteuert vom Brustbein (30) wegbewegt wird, indem das federgespannte Abweiserelement (34) durch das Brustbein (30) ausgelenkt wird, sobald das Brustbein (30) das Abweiserelement (34) erreicht, bis der Fleischstreifen (13) mindestens teilweise vom Brustbeinkamm (11) abgelöst ist.

43. Verfahren einem oder mehreren der Ansprüche 38 bis 42, **dadurch gekennzeichnet, dass** die Zangenbacken (32, 33) nach dem mindestens teilweisen Ablösen des Fleischstreifens (13) aktiv geöffnet werden und das aus Greifzange (31) und Abweiserelement (34) gebildete Ablöseelement (20) federgespannt in seine Warteposition mit geöffneten Zangenbacken (32, 33) bewegt wird.

44. Verfahren nach einem oder mehreren der Ansprüche 33 bis 43, **dadurch gekennzeichnet, dass** der Stützkörper (16) mit noch in der Greifzange (31) geklemmtem Fleischstreifen (13) aus einer Ausrichtung, in der dieser zum Anlösen und Abziehen des Fleischstreifens (13) mit seiner Längsachse L_{SK} parallel zur Transportrichtung T der Haltevorrichtungen (15) ausgerichtet ist, um eine Drehachse D_{SK}, die quer zur Transportrichtung T ausgerichtet ist, gedreht wird, um den angelösten und mindestens teilweise abgelösten Fleischstreifen (13) vollständig von der Geflügelkarkasse (12) zu reißen.

45. Verfahren nach einem oder mehreren der Ansprüche 33 bis 37, **dadurch gekennzeichnet, dass** für den Ablöseschritt zum Ablösen des bereits angelösten Fleischstreifens (13) die Geflügelkarkasse(12) mit dem Brustbeinkamm (11) zwischen zwei Klemmbacken (50, 51) eingeführt wird.

46. Verfahren nach Anspruch 45, **dadurch gekennzeichnet, dass** die Geflügelkarkasse mit dem Bereich eines Brustbeinansatzes (54) zwischen dem Brustbeinkamm (11) und einem Brustbeinsteg (55) parallel zur Transportrichtung T in einen zwischen zwei Blechkörpern als Klemmbacken (50, 51) gebildeten Spalt (53) eingeführt wird, so dass sich die Blechkörper zwischen dem angelösten Fleischstreifen (13) und dem Brustbeinsteg (54) befinden.

47. Verfahren nach Anspruch 46, **dadurch gekennzeichnet, dass** der angelöste Fleischstreifen (13) beim Transport der Geflügelkarkasse (12) in Transportrichtung T von den Blechkörpern zunächst in Richtung einer freien Kante ( ) des Brustbeinkamms (11) bewegt und letztlich in Transportrichtung T aufgehalten wird, so dass der Fleischstreifen (13) beim Weitertransport der Geflügelkarkasse (12) in Transportrichtung T aus der Löseeinheit (18) heraus festgehalten und vollständig vom Brustbeinkamm (11) abgerissen wird.

48. Verfahren nach Anspruch 46 oder 47, **dadurch gekennzeichnet, dass** mindestens ein Blechkörper produktgesteuert vom zweiten Blechkörper wegbewegt wird, so dass die Blechkörper einen Spalt (53) zwischen sich bilden und zu beiden Seiten des Brustbeinkamms (11) am Brustbeinansatz (54) anliegen, wobei sich der Spalt (53) zwischen den beiden Blechkörpern schließt und den Fleischstreifen (13) hält, sobald der Brustbeinkamm (11) die Löseeinheit (18) verlässt.

49. Verfahren nach Anspruch 47 oder 48, **dadurch gekennzeichnet, dass** die von den Blechkörpern gehaltenen und vollständig vom Brustbein (30) gelösten Fleischstreifen (13) jeweils von nachfolgend gelösten Fleischstreifen (13) aus der Halterung gedrückt und abtransportiert werden.

50. Verfahren nach einem oder mehreren der Ansprüche 33 bis 49, **dadurch gekennzeichnet, dass** es mit einer Vorrichtung (10) nach einem oder mehreren der Ansprüche 1 bis 32 ausgeführt wird.

## Claims

1. Apparatus (10), configured and adapted for detaching meat strips (13), which are located on a breastbone crest (11) of a poultry carcass (12), from poultry carcasses (12) of slaughtered poultry bodies or parts thereof which are already freed from breast fillets, comprising a circulating conveyor (14) having at least one holding apparatus (15) with a support body (16) for receiving and holding the poultry bodies or the parts thereof during transport by the apparatus (10) in transport direction T, and at least one processing station (17) along a conveying path of the conveyor (14), wherein one of the processing stations (17) is configured as a detaching unit (18) for detaching the meat strips (13) from the breastbone crest (11), **characterised in that** the detaching unit (18) comprises a pre-detaching element (19) and a detaching element (20), wherein the pre-detaching element (19) is configured and adapted to cut into the meat strip (13) in the region of a breastbone horn (21) of the breastbone crest (11) which leads in transport direction T and the detaching element (20) is configured and adapted to grip and peel the meat strip (13) off the breastbone crest (11).

2. Apparatus (10) according to claim 1, **characterised in that** the pre-detaching element (19) and the detaching element (20) are separate tools which are configured and adapted to carry out separate work steps that can be performed one after the other and are arranged one behind the other in transport direction T.

3. Apparatus (10) according to claim 1 or 2, **characterised in that** the pre-detaching element (19) and the detaching element (20) are arranged on a preferably common main body (22), wherein the detaching element (20) is arranged downstream of the pre-detaching element (19) in transport direction T.

4. Apparatus (10) according to one or more of claims 1 to 3, **characterised in that** the support body (16) is preferably configured to be rotatable about an axis of rotation D_{SK}, which is oriented essentially transverse to the transport direction T, and has a position in the region of the detaching unit (18) in which the longitudinal axis L_{SK} of the support body (16) is oriented parallel to the transport direction T.

5. Apparatus (10) according to claim 3 or 4, **characterised in that** the pre-detaching element (19) comprises a pivot lever (25) on the free end (26) of which a blade (27) is arranged, wherein the pivot lever (25) is mounted on the main body (22) such that it can pivot about a pivot axis S_{AE}.

6. Apparatus (10) according to claim 5, **characterised in that** the blade (27) is releasably attached to the pivot lever (25).

7. Apparatus (10) according to claim 5 or 6, **characterised in that** the pivot lever (25) is spring-loaded against an adjustable abutment in a starting position in such a manner that the breastbone (30) of the poultry carcasses (12) transported along the transport path in transport direction T inevitably comes into engagement with the pivot lever (25) which is in the starting position and its blade (27) arranged thereon by means of the conveyor (14).

8. Apparatus (10) according to one or more of claims 5 to 7, **characterised in that** the blade (27) on the free end of the pivot lever (25) is oriented in the starting position of said pivot lever at an angle β to the poultry carcass (12) to be processed, in such a manner that the tip of the blade (27) is directed towards the breastbone horn (21).

9. Apparatus (10) according to claim 8, **characterised in that** the angle β enclosed between the longitudinal axis L_{SK} of the support body (16) and the longitudinal axis L_{K} of the blade (27) is greater than 0° and less than 90° and is preferably between 20° and 60° and particularly preferably is approximately 45°.

10. Apparatus (10) according to one or more of claims 7 to 9, **characterised in that** the pivotably mounted and spring-loaded pivot lever (25) is configured to be deflectable against the spring force in a product-controlled manner.

11. Apparatus (10) according to one or more of claims 1 to 10, **characterised in that** the detaching element (20) comprises gripping tongs (31) with a pair of tong jaws (32, 33) and a deflector element (34), wherein the gripping tongs (31) are arranged upstream of the deflector element (34) in transport direction T.

12. Apparatus (10) according to one or more of claims 3 to 11, **characterised in that** the detaching element (20) is mounted on the main body (22) such that it can pivot about a pivot axis S_{GA}.

13. Apparatus (10) according to one or more of claims 1 to 12, **characterised in that** the detaching element (20) is spring-loaded against an adjustable abutment in a starting position, in such a manner that the breastbone (30) of the poultry carcasses (12) transported by means of the conveyor (14) along the transport path in transport direction T inevitably comes into engagement with the detaching element (20) which is in the starting position.

14. Apparatus (10) according to claim 13, **characterised in that** the pivotably mounted and spring-loaded detaching element (20) is configured to be deflectable against the spring force in a product-controlled manner.

15. Apparatus (10) according to one or more of claims 12 to 14, **characterised in that** the deflector element (34) is mounted on the main body (22) such that it can pivot about the pivot axis S_{GA} and the pair of tong jaws (32, 33) is mounted on the deflector element (34) such that it can pivot about pivot axes S_{ZB} with respect to the deflector element (34), wherein the pivot axes S_{ZB} of the tong jaws (32, 33) are aligned substantially transverse to the pivot axis S_{GA} of the deflector element (34).

16. Apparatus (10) according to one or more of claims 11 to 15, **characterised in that** a pneumatic drive (41) for pneumatically opening and closing the tong jaws (32, 33) is associated with the gripping tongs (31), wherein the pivoting movements of the tong jaws (32, 33) can be executed towards each other and away from each other with respect to the deflector element (34).

17. Apparatus (10) according to one or more of claims 11 to 16, **characterised in that** the two tong jaws (32, 33) have profiling (42) on their inner surfaces directed towards each other, wherein the profiling (42) is preferably formed from a longitudinal section of the inner surfaces, in such a manner that profiled grooves in the starting position of the detaching element (20) extend substantially parallel to the longitudinal axis L_{SK} of the support body (16) or substantially parallel to the transport direction T.

18. Apparatus (10) according to one or more of claims 1 to 17, **characterised in that** in addition a flap element is provided which is spring-loaded and arranged along the transport path in such a manner that it can be brought into engagement with the meat strip (13) already partially peeled off the breastbone crest (11).

19. Apparatus (10) according to one or more of claims 12 to 18, **characterised in that** the pivot axes S_{AE} of the pre-detaching element (19) and S_{GA} of the detaching element (20) are oriented transverse to the transport direction T.

20. Apparatus (10) according to one or more of claims 1 to 10, **characterised in that** the detaching element (20) comprises two clamping jaws (50, 51), wherein at least one of the clamping jaws (50, 51) is configured to be movable with respect to the second clamping jaw (51, 50).

21. Apparatus (10) according to claim 20, **characterised in that** a first clamping jaw (50) is configured to be fixed and stationary, and the second clamping jaw (51) is configured to be movable with respect to the first clamping jaw (50).

22. Apparatus (10) according to claim 20 or 21, **characterised in that** the or each movable clamping jaw (51) is held by means of at least one spring element (52) under spring tension in a receiving position for receiving the breastbone crest (11) between the two clamping jaws (50, 51), wherein the movable clamping jaw (51) is configured and adapted to be deflectable with respect to the fixed clamping jaw (50) against the spring force of the spring element (52) in a product-controlled manner.

23. Apparatus (10) according to one or more of claims 20 to 22, **characterised in that** the two clamping jaws (50, 51) are formed by two separate sheet metal bodies which, in order to form a gap (53) for receiving the breastbone crest (11), are arranged with their thin edges (50.1, 51.1) opposite each other in such a manner that a breastbone (30) of the poultry carcass (12), which is transported parallel to the transport direction T, can be introduced into the gap (53) on a breastbone appendage (54) between the breastbone crest (11) and a breastbone web (55).

24. Apparatus (10) according to claim 22 or 23, **characterised in that** the clamping jaws (50, 51) or the sheet metal bodies are configured and adapted in such a manner that, in the receiving position, they are shaped so as to expand counter to the poultry bodies or parts thereof entering in transport direction T.

25. Apparatus (10) according to one or more of claims 20 to 24, **characterised in that** the movable clamping jaw (51) or the movable sheet metal body is configured and adapted to be rotatable about an axis of rotation D from a receiving position to a holding position and back.

26. Apparatus (10) according to claim 25, **characterised in that** the axis of rotation D of the movable clamping jaw (51) or the movable sheet metal body is oriented parallel to the transport direction T of the incoming poultry bodies or the parts thereof.

27. Apparatus (10) according to one or more of claims 23 to 26, **characterised in that** the clamping jaws (50, 51) or the sheet metal bodies are oriented in transport direction T of the incoming poultry bodies or the parts thereof with a first portion (A) substantially parallel to the transport direction T and parallel to the breastbone appendage (54) between the breastbone crest (11) and the breastbone web (55), while at least one second portion (B) is oriented at an angle β to the transport direction T and to the breastbone appendage (54) between the breastbone crest (11) and the breastbone web (55) with β > 0 running away from a transport path defined by transport direction T of the poultry bodies or the parts thereof.

28. Apparatus (10) according to claim 27, **characterised in that** a third portion (C) of the clamping jaws (50, 51) or the sheet metal bodies is oriented at an angle α to the transport direction T and to the breastbone appendage (54) between the breastbone crest (11) and the breastbone web (55) with α > β running away from the transport path, wherein the first and second and third portions (A, B, C) of a clamping jaw (50, 51) or a sheet metal body are each arranged one behind the other in transport direction T and are integrally connected to each other.

29. Apparatus (10) according to one or more of claims 20 to 28, **characterised in that** the two clamping jaws (50, 51) or sheet metal bodies forming the detaching element (20) are configured to extend in alignment in transport direction T.

30. Apparatus (10) according to one or more of claims 13 to 29, **characterised in that** the spring force of the pre-detaching element (19) and/or the spring force of the detaching element (20) is configured to be adjustable.

31. Apparatus (10) according to one or more of claims 1 to 30, **characterised in that** in transport direction T upstream of the detaching unit (18) for detaching the meat strips (13) from the breastbone crest (11), further processing stations (17) may be or are configured as a scoring unit for scoring the skin, as a skinning unit (43) for removing the skin, as a sinew separating unit (44), as a unit (45) for separating the wishbones, as a filleting unit (46) for detaching and separating the breast fillets from the poultry carcass (12), and as a unit (47) for recovering remainders of meat located laterally on the breastbone (30), and in transport direction T downstream of the detaching unit (18) for detaching the meat strips (13) from the breastbone crest (11) further processing stations (17) may be or are configured as a unit (48) for recovering parts of the breastbone (30) which also comprise the cartilaginous regions of the breastbone or parts thereof.

32. Apparatus (10) according to one or more of claims 1 to 31, **characterised in that** it comprises a control unit which is configured and adapted to control the conveyor (14) including the holding apparatus (15) comprising the support body (16) and the or each processing station (17).

33. Method for detaching meat strips (13), which are located on a breastbone crest (11) of a poultry carcass (12), from poultry carcasses (12) of slaughtered poultry bodies or parts thereof which are already freed from breast fillets, comprising the steps:
- Feeding the poultry carcass (12) along a conveying path in transport direction T into the region of a detaching unit (18) for detaching the meat strip (13), wherein the poultry carcass (12) is held during transport in transport direction T on a support body (16) of a holding apparatus (15) for holding the poultry carcass (12) during transport and during processing, wherein the longitudinal axis L_{SK} of the support body (16) is oriented parallel to the transport direction T, and
- Detachment of the meat strip (13) during transport along or through the detaching unit,
**characterised in that** the meat strip (13) is detached from the breastbone crest (11) of the poultry carcass (12) by means of the detaching unit (18) in two separate and successive steps.

34. Method according to claim 33, **characterised in that**, in a first pre-detaching step, the meat strip (13) is pre-detached in the region of a breastbone horn (21) of the breastbone (30) preceding in transport direction T, **in that** the membrane on the breastbone horn (21) located between the meat and the breastbone (30) is cut into, while, in a second pre-detaching step, the free end of the meat strip (13) cut into is gripped and peeled off the breastbone crest (11) in the longitudinal direction thereof.

35. Method according to claim 34, **characterised in that**, for the pre-detaching step, the incision in the meat strip (13) is made in the region of the breastbone horn (21) to pre-detach the meat strip (13) using a blade (27) at an acute angle β, which is formed between a longitudinal axis L_{SK} of a support body (16) carrying the poultry carcass (12) and a longitudinal axis L_{K} of a blade (27) making the incision.

36. Method according to claim 35, **characterised in that**, in its starting position, the blade (27) is brought into engagement with the breastbone horn (21) by transporting the poultry carcass (12) in transport direction T, the blade (27) is then guided in a product-controlled manner, wherein the pressure of the blade (27) on the breastbone horn (21) increases due to the further transport in transport direction T, and the blade (27) is moved back to its starting position as soon as the blade (27) is out of engagement with the poultry carcass (12) due to the further transport in transport direction T.

37. Method according to claim 35 or 36, **characterised in that** the blade (27) is deflected via a pivot lever (25) against a spring tension by the breastbone (30) of the poultry carcass (12) in order to be moved out of engagement by the spring tension back to its starting position against an abutment.

38. Method according to one or more of claims 34 to 37, **characterised in that** for the detaching step to detach the already pre-detached meat strip (13), the free end thereof is clamped between two tong jaws (32, 33) of gripping tongs (31), and the clamped meat strip (13) is stripped at least partially from the breastbone crest (21) in the longitudinal direction by a product-controlled deflector element (34).

39. Method according to claim 38, **characterised in that** the tong jaws (32, 33) of the gripping tongs (31) are closed and opened by means of a pneumatic drive, wherein the gripping tongs (31) in their clamping position are moved away from the breastbone (30) in a product-controlled manner via the deflector element (34).

40. Method according to claim 38 or 39, **characterised in that** the gripping tongs (31) or the two tong jaws (32, 33) are actively controlled closed and open along the conveying path depending on the position of the support body (16) carrying the poultry carcass (12).

41. Method according to one or more of claims 38 to 40, **characterised in that** the tong jaws (32, 33) of the gripping tongs (31) wait in an open standby position along the conveying path until the tip of the breastbone (30), in the form of the breastbone horn (21) with the pre-detached meat strip (13), enters the open gripping tongs (31), in order to then move the tong jaws (32, 33) in a pneumatically controlled manner into their clamping position to clamp the free end of the meat strip (13).

42. Method according to one or more of claims 38 to 41, **characterised in that** the closed gripping tongs (31) clamping the meat strip (13) are moved away from the breastbone (30) in a product-controlled manner during transport in transport direction T, **in that** the spring-loaded deflector element (34) is deflected by the breastbone (30) as soon as the breastbone (30) reaches the deflector element (34) until the meat strip (13) is at least partially detached from the breastbone crest (11).

43. Method according to one or more of claims 38 to 42, **characterised in that**, after at least partial detachment of the meat strip (13), the tong jaws (32, 33) are actively opened and the detaching element (20) formed of gripping tongs (31) and deflector element (34) is moved in a spring-loaded manner into its standby position with tong jaws (32, 33) open.

44. Method according to one or more of claims 33 to 43, **characterised in that** the support body (16) with the meat strip (13) still clamped in the gripping tongs (31) is rotated about an axis of rotation D_{SK}, which is oriented transverse to the transport direction T, out of an alignment in which said support body is oriented with its longitudinal axis L_{SK} parallel to the transport direction T of the holding apparatuses (15) for pre-detaching and peeling off the meat strip (13), in order to strip the pre-detached and at least partially detached meat strip (13) completely from the poultry carcass (12).

45. Method according to one or more of claims 33 to 37, **characterised in that** for the detaching step to detach the already pre-detached meat strip (13), the poultry carcass (12) is inserted with the breastbone crest (11) between two clamping jaws (50, 51).

46. Method according to claim 45, **characterised in that** the poultry carcass is inserted with the region of a breastbone appendage (54) between the breastbone crest (11) and a breastbone web (55) parallel to the transport direction T into a gap (53) formed between two sheet metal bodies as clamping jaws (50, 51) so that the sheet metal bodies are located between the pre-detached meat strip (13) and the breastbone web (54).

47. Method according to claim 46, **characterised in that** during transport of the poultry carcass (12) in transport direction T, the pre-detached meat strip (13) is initially moved by the sheet metal bodies towards a free edge of the breastbone crest (11) and is ultimately stopped in transport direction T so that during further transport of the poultry carcass (12) in transport direction T, the meat strip (13) is held out of the detaching unit (18) and completely stripped off the breastbone crest (11).

48. Method according to claim 46 or 47, **characterised in that** at least one sheet metal body is moved away from the second sheet metal body in a product - controlled manner so that the sheet metal bodies form a gap (53) between them and rest on the breastbone appendage (54) on both sides of the breastbone crest (11), wherein the gap (53) between the two sheet metal bodies closes and holds the meat strip (13) as soon as the breastbone crest (11) leaves the detaching unit (18).

49. Method according to claim 47 or 48, **characterised in that** the meat strips (13) held by the sheet metal bodies and completely detached from the breastbone (30) are each pressed out of the holder by subsequently detached meat strips (13) and transported away.

50. Method according to one or more of claims 33 to 49, **characterised in that** it is carried out with an apparatus (10) according to one or more of claims 1 to 32.

## Revendications

1. Dispositif (10), configuré et adapté pour détacher des bandes de viande (13) se trouvant sur une crête sternale (11) d'une carcasse de volaille (12), à partir de carcasses de volaille (12) de corps de volailles abattues ou de parties de ceux-ci déjà débarrassées de filets de poitrine, comprenant un convoyeur périphérique (14) avec au moins un dispositif de maintien (15) avec un corps de support (16) pour recevoir et maintenir les corps de volailles ou les parties de ceux-ci pendant le transport dans une direction de transport T à travers le dispositif (10), ainsi qu'au moins une station de traitement (17) le long d'un trajet de convoyage du convoyeur (14), l'une des stations de traitement (17) étant configurée sous forme d'unité de détachement (18) pour détacher la bande de viande (13) de la crête sternale (11), **caractérisé en ce que** l'unité de détachement (18) comprend un élément d'amorce de détachement (19) et un élément de détachement (20), l'élément d'amorce de détachement (19) étant configuré et adapté pour inciser la bande de viande (13) dans la zone d'une corne sternale (21) de la crête sternale (11), avançant en tête dans la direction de transport **T,** et l'élément de détachement (20) étant configuré et adapté pour saisir et retirer la bande de viande (13) de la crête sternale (11).

2. Dispositif (10) selon la revendication 1, **caractérisé en ce que** l'élément d'amorce de détachement (19) et l'élément de détachement (20) sont des outils séparés, qui sont configurés et adaptés pour exécuter des étapes de travail séparées et pouvant être exécutées successivement, et sont disposés l'un derrière l'autre dans la direction de transport T.

3. Dispositif (10) selon la revendication 1 ou 2, **caractérisé en ce que** l'élément d'amorce de détachement (19) et l'élément de détachement (20) sont disposés sur un corps de base (22), de préférence commun, l'élément de détachement (20) étant disposé derrière l'élément d'amorce de détachement (19) dans la direction de transport T.

4. Dispositif (10) selon une ou plusieurs des revendications 1 à 3, **caractérisé en ce que** le corps de support (16) est configuré sous forme rotative de préférence autour d'un axe de rotation D_{SK} orienté essentiellement transversalement à la direction de transport T et présente, dans la zone de l'unité de détachement (18), une position dans laquelle l'axe longitudinal L_{SK} du corps de support (16) est orienté parallèlement à la direction de transport T.

5. Dispositif (10) selon la revendication 3 ou 4, **caractérisé en ce que** l'élément d'amorce de détachement (19) comprend un levier pivotant (25), à l'extrémité libre (26) duquel est disposée une lame (27), le levier pivotant (25) étant monté pivotant sur le corps de base (22) autour d'un axe de pivotement S_{AE}.

6. Dispositif (10) selon la revendication 5, **caractérisé en ce que** la lame (27) est fixée de manière amovible au levier pivotant (25).

7. Dispositif (10) selon la revendication 5 ou 6, **caractérisé en ce que** le levier pivotant (25) se trouve sous tension par ressort contre une butée réglable dans une position initiale, de telle sorte que les carcasses de volaille (12) transportées au moyen du convoyeur (14) le long du trajet de convoyage dans la direction de transport T entrent nécessairement en prise, avec le sternum (30), avec le levier pivotant (25) se trouvant dans la position initiale et sa lame (27) qui y est disposée.

8. Dispositif (10) selon une ou plusieurs des revendications 5 à 7, **caractérisé en ce que** la lame (27) est orientée, à l'extrémité libre du levier pivotant (25), dans sa position initiale, selon un angle β par rapport à la carcasse de volaille (12) à traiter, de telle sorte que la pointe de la lame (27) soit dirigée vers la corne sternale (21).

9. Dispositif (10) selon la revendication 8, **caractérisé en ce que** l'angle β compris entre l'axe longitudinal L_{SK} du corps de support (16) et l'axe longitudinal L_{K} de la lame (27) est supérieur à 0° et inférieur à 90°, et est de préférence compris entre 20° et 60° et, de manière particulièrement préférée, est d'environ 45°.

10. Dispositif (10) selon une ou plusieurs des revendications 7 à 9, **caractérisé en ce que** le levier pivotant (25), monté pivotant et sous tension par ressort, est configuré de manière à pouvoir être dévié à l'encontre de la force du ressort de manière commandée par le produit.

11. Dispositif (10) selon une ou plusieurs des revendications 1 à 10, **caractérisé en ce que** l'élément de détachement (20) comprend une pince de préhension (31) avec une paire de mâchoires de pince (32, 33), ainsi qu'un élément déflecteur (34), la pince de préhension (31) étant disposée devant l'élément déflecteur (34) dans la direction de transport T.

12. Dispositif (10) selon une ou plusieurs des revendications 3 à 11, **caractérisé en ce que** l'élément de détachement (20) est monté pivotant sur le corps de base (22) autour d'un axe de pivotement S_{GA}.

13. Dispositif (10) selon une ou plusieurs des revendications 1 à 12, **caractérisé en ce que** l'élément de détachement (20) se trouve sous tension par ressort contre une butée réglable dans une position initiale, de telle sorte que les carcasses de volaille (12) transportées au moyen du convoyeur (14) le long du trajet de convoyage dans la direction de transport T entrent nécessairement en prise, avec leur sternum (30), avec l'élément de détachement (20) se trouvant dans la position initiale.

14. Dispositif (10) selon la revendication 13, **caractérisé en ce que** l'élément de détachement (20), monté pivotant et sous tension par ressort, est configuré de manière à pouvoir être dévié à l'encontre de la force du ressort de manière commandée par le produit.

15. Dispositif (10) selon une ou plusieurs des revendications 12 à 14, **caractérisé en ce que** l'élément déflecteur (34) est monté pivotant sur le corps de base (22) autour de l'axe de pivotement S_{GA}, et la paire de mâchoires de pince (32, 33) est montée pivotante relativement à l'élément déflecteur (34) autour d'axes de pivotement S_{ZB} sur l'élément déflecteur (34), les axes de pivotement S_{ZB} des mâchoires de pince (32, 33) étant orientés essentiellement transversalement à l'axe de pivotement S_{GA} de l'élément déflecteur (34).

16. Dispositif (10) selon une ou plusieurs des revendications 11 à 15, **caractérisé en ce qu'**un entraînement pneumatique (41) destiné à la fermeture et à l'ouverture pneumatiques des mâchoires de pince (32, 33) est associé à la pince de préhension (31), les mouvements de pivotement des mâchoires de pince (32, 33) l'une vers l'autre et l'une à l'écart de l'autre pouvant être exécutés relativement à l'élément déflecteur (34).

17. Dispositif (10) selon une ou plusieurs des revendications 11 à 16, **caractérisé en ce que** les deux mâchoires de pince (32, 33) présentent un profilage (42) sur leurs surfaces intérieures tournées l'une vers l'autre, le profilage (42) étant de préférence formé par un usinage longitudinal des surfaces intérieures, de telle sorte que des rainures de profilage s'étendent, dans la position initiale de l'élément de détachement (20), essentiellement parallèlement à l'axe longitudinal L_{SK} du corps de support (16) ou essentiellement parallèlement à la direction de transport T.

18. Dispositif (10) selon une ou plusieurs des revendications 1 à 17, **caractérisé en ce qu'**un élément à clapet est en outre prévu, lequel est configuré sollicité par ressort et disposé le long du trajet de convoyage de telle sorte qu'il puisse être mis en prise avec la bande de viande (13) déjà partiellement retirée de la crête sternale (11).

19. Dispositif (10) selon une ou plusieurs des revendications 12 à 18, **caractérisé en ce que** les axes de pivotement S_{AE} de l'élément d'amorce de détachement (19) et S_{GA} de l'élément de détachement (20) sont orientés transversalement à la direction de transport T.

20. Dispositif (10) selon une ou plusieurs des revendications 1 à 10, **caractérisé en ce que** l'élément de détachement (20) comprend deux mâchoires de serrage (50, 51), au moins l'une des mâchoires de serrage (50, 51) étant configurée sous forme mobile relativement à la deuxième mâchoire de serrage (51, 50).

21. Dispositif (10) selon la revendication 20, **caractérisé en ce qu'**une première mâchoire de serrage (50) est configurée sous forme fixe et stationnaire, et la deuxième mâchoire de serrage (51) est configurée sous forme mobile relativement à la première mâchoire de serrage (50).

22. Dispositif (10) selon la revendication 20 ou 21, **caractérisé en ce que** la ou chaque mâchoire de serrage mobile (51) est maintenue sous tension par ressort au moyen d'au moins un élément à ressort (52) dans une position de réception destinée à recevoir la crête sternale (11) entre les deux mâchoires de serrage (50, 51), la mâchoire de serrage mobile (51) étant configurée et adaptée de manière à pouvoir être déviée relativement à la mâchoire de serrage fixe (50) de manière commandée par le produit à l'encontre de la force de ressort de l'élément à ressort (52).

23. Dispositif (10) selon une ou plusieurs des revendications 20 à 22, **caractérisé en ce que** les deux mâchoires de serrage (50, 51) sont formées par deux corps de tôle séparés, qui sont disposés avec leurs bords étroits (50.1, 51.1) se faisant face afin de former un interstice (53) destiné à recevoir la crête sternale (11), de telle sorte qu'un sternum (30) de la carcasse de volaille (12), transporté parallèlement à la direction de transport **T,** puisse être introduit dans l'interstice (53) au niveau d'une attache sternale (54) entre la crête sternale (11) et un pont sternal (55).

24. Dispositif (10) selon la revendication 22 ou 23, **caractérisé en ce que** les mâchoires de serrage (50, 51), ou les corps de tôle, sont configurés et adaptés de telle sorte que, dans la position de réception, ils sont formés en s'élargissant à l'encontre des corps de volailles ou des parties de ceux-ci entrant dans la direction de transport T.

25. Dispositif (10) selon une ou plusieurs des revendications 20 à 24, **caractérisé en ce que** la mâchoire de serrage mobile (51), ou le corps de tôle mobile, est configuré et adapté de manière à pouvoir tourner autour d'un axe de rotation D depuis une position de réception vers une position de maintien et inversement.

26. Dispositif (10) selon la revendication 25, **caractérisé en ce que** l'axe de rotation D de la mâchoire de serrage mobile (51), ou du corps de tôle mobile, est orienté parallèlement à la direction de transport T des corps de volailles entrant ou des parties de ceux-ci.

27. Dispositif (10) selon une ou plusieurs des revendications 23 à 26, **caractérisé en ce que** les mâchoires de serrage (50, 51), ou les corps de tôle, sont orientés, dans la direction de transport T des corps de volailles entrant ou des parties de ceux-ci, avec une première section (A) essentiellement parallèlement à la direction de transport T et parallèlement à l'attache sternale (54) entre la crête sternale (11) et le pont sternal (55), tandis qu'au moins une deuxième section (B) est orientée selon un angle β par rapport à la direction de transport T et à l'attache sternale (54) entre la crête sternale (11) et le pont sternal (55), avec β > 0, en s'éloignant d'un chemin de transport défini par les corps de volailles ou les parties de ceux-ci dans la direction de transport T.

28. Dispositif (10) selon la revendication 27, **caractérisé en ce qu'**une troisième section (C) des mâchoires de serrage (50, 51), ou des corps de tôle, est orientée selon un angle α par rapport à la direction de transport T et à l'attache sternale (54) entre la crête sternale (11) et le pont sternal (55), avec α > β, en s'éloignant du chemin de transport, les première et deuxième et troisième sections (A, **B,** C) d'une mâchoire de serrage (50, 51), ou d'un corps de tôle, étant respectivement disposées les unes derrière les autres dans la direction de transport T et reliées d'un seul tenant entre elles.

29. Dispositif (10) selon une ou plusieurs des revendications 20 à 28, **caractérisé en ce que** les deux mâchoires de serrage (50, 51), ou corps de tôle, formant l'élément de détachement (20) sont configurés de manière à s'étendre dans le même sens dans la direction de transport T.

30. Dispositif (10) selon une ou plusieurs des revendications 13 à 29, **caractérisé en ce que** la force de ressort de l'élément d'amorce de détachement (19) et/ou la force de ressort de l'élément de détachement (20) est configurée de manière à être réglable.

31. Dispositif (10) selon une ou plusieurs des revendications 1 à 30, **caractérisé en ce que**, dans la direction de transport **T,** avant l'unité de détachement (18) destinée à détacher la bande de viande (13) de la crête sternale (11), d'autres stations de traitement (17) peuvent être ou sont configurées sous la forme d'une unité d'entaillage pour pratiquer des entailles dans la peau, d'une unité de dépouillage (43) pour retirer la peau, d'une unité de séparation des tendons (44), d'une unité (45) pour séparer les os de la fourchette, d'une unité de filetage (46) pour détacher et séparer les filets de poitrine de la carcasse de volaille (12), ainsi que d'une unité (47) destinée à récupérer la viande résiduelle se trouvant latéralement sur le sternum (30), et, dans la direction de transport **T,** après l'unité de détachement (18) destinée à détacher la bande de viande (13) de la crête sternale (11), d'autres stations de traitement (17) peuvent être ou sont configurées sous la forme d'une unité (48) destinée à récupérer des parties du sternum (30), comprenant également les zones cartilagineuses du sternum ou des parties de celles-ci.

32. Dispositif (10) selon une ou plusieurs des revendications 1 à 31, **caractérisé en ce qu'**il comprend une unité de commande configurée et adaptée pour commander le convoyeur (14), y compris le dispositif de maintien (15) comprenant le corps de support (16), ainsi que la ou chaque station de traitement (17).

33. Procédé de détachement de bandes de viande (13) se trouvant sur une crête sternale (11) d'une carcasse de volaille (12), à partir de carcasses de volaille (12) de corps de volailles abattues ou de parties de ceux-ci déjà débarrassées de filets de poitrine, comprenant les étapes consistant à :
- acheminer la carcasse de volaille (12) le long d'un trajet de convoyage dans une direction de transport T vers la zone d'une unité de détachement (18) destinée au détachement de la bande de viande (13), la carcasse de volaille (12) étant maintenue, pendant le transport dans la direction de transport T, sur un corps de support (16) d'un dispositif de maintien (15) destiné à maintenir les carcasses de volaille (12) pendant le transport et pendant le traitement, l'axe longitudinal L_{SK} du corps de support (16) étant orienté parallèlement à la direction de transport T, et
- détacher la bande de viande (13) pendant le transport le long de l'unité de détachement ou à travers celle-ci,
**caractérisé en ce que** la bande de viande (13) est détachée de la crête sternale (11) de la carcasse de volaille (12) au moyen de l'unité de détachement (18) en deux étapes séparées exécutées successivement.

34. Procédé selon la revendication 33, **caractérisé en ce que**, lors d'une première étape d'amorce de détachement, la bande de viande (13) est amorcée pour le détachement dans la zone d'une corne sternale (21) du sternum (30), avançant en tête dans la direction de transport T, par le fait que la membrane se trouvant entre la viande et le sternum (30) est incisée au niveau de la corne sternale (21), tandis que, lors d'une deuxième étape de détachement, l'extrémité libre incisée de la bande de viande (13) est saisie et retirée de la crête sternale (11) dans la direction longitudinale de celle-ci.

35. Procédé selon la revendication 34, **caractérisé en ce que**, pour l'étape d'amorce de détachement, l'incision dans la bande de viande (13) dans la zone de la corne sternale (21) destinée à amorcer le détachement de la bande de viande (13) est exécutée par une lame (27) selon un angle aigu β formé entre un axe longitudinal L_{SK} d'un corps de support (16) portant la carcasse de volaille (12) et un axe longitudinal L_{K} d'une lame (27) exécutant l'incision.

36. Procédé selon la revendication 35, **caractérisé en ce que** la lame (27), dans sa position initiale, est mise en prise avec la corne sternale (21) par le transport de la carcasse de volaille (12) dans la direction de transport T, la lame (27) étant ensuite guidée de manière commandée par le produit, la pression de la lame (27) sur la corne sternale (21) augmentant par la poursuite du transport dans la direction de transport T, et la lame (27) étant ramenée dans sa position initiale dès que, du fait de la poursuite du transport dans la direction de transport T, la lame (27) se trouve hors de prise avec la carcasse de volaille (12).

37. Procédé selon la revendication 35 ou 36, **caractérisé en ce que** la lame (27) est déviée, par l'intermédiaire d'un levier pivotant (25), par le sternum (30) de la carcasse de volaille (12) à l'encontre d'une tension de ressort, afin d'être ramenée, hors de prise, par la tension de ressort dans sa position initiale contre une butée.

38. Procédé selon une ou plusieurs des revendications 34 à 37, **caractérisé en ce que**, pour l'étape de détachement destinée à détacher la bande de viande (13) déjà amorcée pour le détachement, l'extrémité libre de celle-ci est serrée entre deux mâchoires de pince (32, 33) d'une pince de préhension (31), et la bande de viande serrée (13) est tirée au moins partiellement de la crête sternale (21) dans la direction longitudinale par un élément déflecteur (34) commandé par le produit.

39. Procédé selon la revendication 38, **caractérisé en ce que** les mâchoires de pince (32, 33) de la pince de préhension (31) sont fermées et ouvertes au moyen d'un entraînement pneumatique, la pince de préhension (31) étant éloignée du sternum (30) dans sa position de serrage de manière commandée par le produit par l'intermédiaire de l'élément déflecteur (34).

40. Procédé selon la revendication 38 ou 39, **caractérisé en ce que** la pince de préhension (31) ou les deux mâchoires de pince (32, 33) sont commandées activement en fermeture et en ouverture en fonction de la position du corps de support (16) portant la carcasse de volaille (12) le long du trajet de convoyage.

41. Procédé selon une ou plusieurs des revendications 38 à 40, **caractérisé en ce que** les mâchoires de pince (32, 33) de la pince de préhension (31) attendent dans une position d'attente ouverte le long du trajet de convoyage jusqu'à ce que la pointe du sternum (30), sous la forme de la corne sternale (21), avec la bande de viande (13) amorcée pour le détachement, entre dans la pince de préhension (31) ouverte, afin de déplacer ensuite les mâchoires de pince (32, 33), sous commande pneumatique, dans leur position de serrage destinée à serrer l'extrémité libre de la bande de viande (13).

42. Procédé selon une ou plusieurs des revendications 38 à 41, **caractérisé en ce que** la pince de préhension (31) fermée et serrant la bande de viande (13) est éloignée du sternum (30) pendant le transport dans la direction de transport T de manière commandée par le produit, par le fait que l'élément déflecteur (34) sous tension par ressort est dévié par le sternum (30) dès que le sternum (30) atteint l'élément déflecteur (34), jusqu'à ce que la bande de viande (13) soit détachée au moins partiellement de la crête sternale (11).

43. Procédé selon une ou plusieurs des revendications 38 à 42, **caractérisé en ce que** les mâchoires de pince (32, 33) sont activement ouvertes après le détachement au moins partiel de la bande de viande (13), et l'élément de détachement (20) formé par la pince de préhension (31) et l'élément déflecteur (34) est déplacé, sous tension par ressort, dans sa position d'attente avec les mâchoires de pince (32, 33) ouvertes.

44. Procédé selon une ou plusieurs des revendications 33 à 43, **caractérisé en ce que** le corps de support (16), avec la bande de viande (13) encore serrée dans la pince de préhension (31), est tourné à partir d'une orientation dans laquelle il est orienté, avec son axe longitudinal L_{SK}, parallèlement à la direction de transport T des dispositifs de maintien (15) pour l'amorce de détachement et le retrait de la bande de viande (13), autour d'un axe de rotation D_{SK} orienté transversalement à la direction de transport T, afin d'arracher complètement de la carcasse de volaille (12) la bande de viande (13) amorcée pour le détachement et au moins partiellement détachée.

45. Procédé selon une ou plusieurs des revendications 33 à 37, **caractérisé en ce que**, pour l'étape de détachement destinée à détacher la bande de viande (13) déjà amorcée pour le détachement, la carcasse de volaille (12) est introduite avec la crête sternale (11) entre deux mâchoires de serrage (50, 51).

46. Procédé selon la revendication 45, **caractérisé en ce que** la carcasse de volaille est introduite, avec la zone d'une attache sternale (54) située entre la crête sternale (11) et un pont sternal (55), parallèlement à la direction de transport T dans un interstice (53) formé entre deux corps de tôle en tant que mâchoires de serrage (50, 51), de telle sorte que les corps de tôle se trouvent entre la bande de viande (13) amorcée pour le détachement et le pont sternal (54).

47. Procédé selon la revendication 46, **caractérisé en ce que** la bande de viande (13) amorcée pour le détachement est, lors du transport de la carcasse de volaille (12) dans la direction de transport T, d'abord déplacée par les corps de tôle en direction d'un bord libre de la crête sternale (11), puis finalement maintenue dans la direction de transport T, de telle sorte que la bande de viande (13) est maintenue lors de la poursuite du transport de la carcasse de volaille (12) dans la direction de transport T hors de l'unité de détachement (18) et est entièrement arrachée de la crête sternale (11).

48. Procédé selon la revendication 46 ou 47, **caractérisé en ce qu'**au moins un corps de tôle est déplacé, de manière commandée par le produit, à l'écart du deuxième corps de tôle, de telle sorte que les corps de tôle forment entre eux un interstice (53) et viennent en appui des deux côtés de la crête sternale (11) au niveau de l'attache sternale (54), l'interstice (53) entre les deux corps de tôle se refermant et maintenant la bande de viande (13) dès que la crête sternale (11) quitte l'unité de détachement (18).

49. Procédé selon la revendication 47 ou 48, **caractérisé en ce que** les bandes de viande (13), maintenues par les corps de tôle et complètement détachées du sternum (30), sont respectivement poussées hors du maintien et évacuées par les bandes de viande (13) détachées ultérieurement.

50. Procédé selon une ou plusieurs des revendications 33 à 49, **caractérisé en ce qu'**il est exécuté avec un dispositif (10) selon une ou plusieurs des revendications 1 à 32.
